(19) Europäisches Patentamt
European Patent Office
Office européen des brevets

(11) EP 3 287 475 A1

(12) EUROPÄISCHE PATENTANMELDUNG

(43) Veröffentlichungstag:
**28.02.2018 Patentblatt 2018/09**

(21) Anmeldenummer: **16185742.0**

(22) Anmeldetag: **25.08.2016**

(51) Int Cl.:
***C08G 2/08*** ^(2006.01)^ ***C08G 2/38*** ^(2006.01)^
***C08G 18/56*** ^(2006.01)^ ***C08G 18/76*** ^(2006.01)^
***C08G 101/00*** ^(2006.01)^

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder:
- **MÜLLER, Thomas Ernst**
**52074 Aachen (DE)**
- **GÜRTLER, Christoph**
**50735 Köln (DE)**
- **LANGSTEIN, Gerhard**
**51515 Kürten (DE)**
- **BIZZARRI, Claudia**
**52070 Aachen (DE)**
- **LEITNER, Walter**
**52074 Aachen (DE)**

(74) Vertreter: **Levpat**
**c/o Covestro AG**
**Gebäude 4825**
**51365 Leverkusen (DE)**

# (54) VERFAHREN ZUR HERSTELLUNG VON ABBAUBAREN POLYURETHANPOLYMEREN UND AUFARBEITUNGSVERFAHREN HIERFÜR

(57) Die vorliegende Erfindung betrifft ein Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol A), und/oder B) umfasst, welche erhältlich sind durch:
im Fall des Polyols A) Umsetzung von Formaldehyd mit einer Starterverbindung mit mindestens 2 Zerewitinoff-aktiven H-Atomen und Comonomeren in Gegenwart eines Katalysators;
im Fall des Polyols B) Umsetzung einer oligomeren Formaldehyd-Vorstufe mit einer Starterverbindung mit mindestens 2 Zerewitinoff-aktiven H-Atomen in Gegenwart eines Katalysators;
sie betrifft weiterhin ein gemäß diesem Verfahren erhältliches Polyurethanpolymer, ein Verfahren zur Aufarbeitung eines Polyols mit dem Schritt des Einwirkens einer Säure auf das Polyol sowie ein Verfahren zur sauren Aufarbeitung eines Polyurethanpolymers.

EP 3 287 475 A1

**Beschreibung**

Die vorliegende Erfindung betrifft ein Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol A), und/oder B) umfasst, welche erhältlich sind durch:

im Fall des Polyols A) Umsetzung von Formaldehyd mit einer Starterverbindung mit mindestens 2 Zerewitinoff-aktiven H-Atomen und Comonomeren in Gegenwart eines Katalysators;

im Fall des Polyols B) Umsetzung einer oligomeren Formaldehyd-Vorstufe mit einer Starterverbindung mit mindestens 2 Zerewitinoff-aktiven H-Atomen in Gegenwart eines Katalysators;

Sie betrifft weiterhin ein gemäß diesem Verfahren erhältliches Polyurethanpolymer, ein Verfahren zur Aufarbeitung eines Polyols mit dem Schritt des Einwirkens einer Säure auf das Polyol sowie ein Verfahren zur sauren Aufarbeitung eines Polyurethanpolymers.

Zum gegenwärtigen Zeitpunkt werden weltweit über 11 Millionen Tonnen Polyurethane pro Jahr produziert. Produktionsreste bzw. Polyurethane nach Ende ihrer Lebensdauer werden meist thermisch verwertet. Unter dem Aspekt der Nachhaltigkeit wäre ein chemischer Abbau der Polyurethane unter Erhalt von neuen Polymerbausteinen wünschenswert. Herkömmliche Polyurethane sind jedoch nur schwer chemisch abbaubar. Beispielsweise wird gemäß Fibers and Polymers 2011, 12(7), 857-863 der Abbau von Polyurethanen in Gegenwart von Glycol und Ethanolamin und Lithiumacetat als Katalysator bei Temperaturen von 170°C.durchgeführt. Beispielsweise beschreibt WO 00/39206 A1 ein Polyurethan-Recycling-Verfahren, in dem das Polyurethan in einem Lösungsmittel aufgequollen wird und mechanisch verkleinert wird. Anschließend wird mit Säuren oder Basen hydrolysiert. Die allgemeinen Herausforderungen bei der Wiederverwendung von Polyurethanen sind in Procedia Environmental Sciences 2012 (16) 167-175 beschrieben.

Dagegen werden Polyoxymethylene bereits bei moderaten Temperaturen abgebaut und sind bei Temperaturen oberhalb von 60 °C instabil, sofern sie nicht durch Einbau entsprechender chemischer Gruppen kinetisch gegenüber Depolymerisation stabilisiert sind. Eine Studie zum thermischen Abbau solcher Polymere ist in Grassie, N. und Roche, R. S. (1968), The thermal degradation of polyoxymethylene, Makromol. Chem., 112: 16-33. doi: 10.1002/macp.1968.021120102 veröffentlicht.

Nicht nur unter dem Aspekt einer nachhaltigeren Produktionsweise ist der Einsatz von zumindest teilweise aus nachwachsenden Rohstoffquellen stammenden Polyurethan-Rohstoffen erstrebenswert. Als $C_1$-Bausteine kommt für Polyole insbesondere Formaldehyd in Frage. Formaldehyd ist nicht an die Verfügbarkeit von Erdöl gebunden und ist in großen Mengen gut zugänglich. Formaldehyd kann gut in hochmolekulare Polyoxymethylene überführt werden.

WO 2014/095679 A1 beschreibt ein Verfahren zur Herstellung von NCO-modifizierten Polyoxymethylen-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Polyoxymethylen-Copolymer erhalten wird. Es werden Polyisocyanate als mögliche Reagenzien zur NCO-Modifizierung genannt. Die Beispiele dieser Patentanmeldung offenbaren jedoch lediglich Tolylisocyanat, ein Monoisocyanat. Die Herstellung von Polyurethanen ist nicht belegt; der Abbau von Polyurethanen ist ebenfalls nicht beschrieben.

Die vorliegende Erfindung hat sich die Aufgabe gestellt, ein Polyurethanpolymer bereitzustellen, bei dem eine Abbaubarkeit in schwach basischen Medien bei Temperaturen von $\leq$ 100°C unter Normaldruck gegeben ist. Die Gebrauchseigenschaften der Polyurethanpolymere sollten jedoch gegenüber herkömmlichen Polyurethanpolymeren nicht beeinträchtigt sein. Vorteilhafterweise sollte die Herstellung des Polyurethanpolymers einen nicht auf Erdöl basierenden $C_1$-Baustein beinhalten. Formaldehyd ist ein solcher $C_1$-Baustein, der im Rahmen der vorliegenden Erfindung als Baustein für die Herstellung von abbaubaren Polyurethan-Materialien verfügbar gemacht werden sollte. Die Erfindung hat sich weiterhin die Aufgabe gestellt, ein Verfahren zur Aufarbeitung von Polyolen, wie sie beispielsweise als Produktionsrückstände anfallen, und zur Aufarbeitung von Polyurethanpolymeren bereitzustellen.

Erfindungsgemäß gelöst wird diese Aufgabe in einem ersten Aspekt durch ein Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol A), und/oder B) umfasst, welche erhältlich sind durch:

im Fall des Polyols A) Umsetzung von Formaldehyd mit einer Starterverbindung mit mindestens 2 Zerewitinoff-aktiven H-Atomen und Comonomeren in Gegenwart eines Katalysators;

im Fall des Polyols B) Umsetzung einer oligomeren Formaldehyd-Vorstufe mit einer Starterverbindung mit mindestens 2 Zerewitinoff-aktiven H-Atomen in Gegenwart eines Katalysators;

wobei das Mengenverhältnis der Polyolkomponente zur der Polyisocyanatkomponente so gewählt ist, dass das durch die Reaktion erhaltene Polyurethanpolymer einen Gehalt an aus dem Oxymethylenpolyol A), und/oder B) stammenden Oxymethylengruppen von > 0 bis < 10 Gewichts-%, bezogen auf das Gesamtgewicht des Polyurethanpolymers, aufweist.

Die gemäß der vorliegenden Erfindung hergestellten Polyurethanpolymere sind unter deutlich milderen Bedingungen abbaubar als vergleichbare Polyurethanpolymere auf, deren Polyolkomponente keine Oxymethylengruppen enthält. Es können Formteile oder Schäume hergestellt werden, die in den Anwendungsfeldern von Polyurethanpolymeren eingesetzt werden können. Produktionsreste bzw. Polyurethanpolymere nach Ende ihrer Gebrauchsdauer können unter milden Bedingungen in flüssige Mischungen überführt werden, die u.a. als Ausgangsstoffe für die Herstellung von Polyurethanpolymeren eingesetzt werden können.

Im Sinne der vorliegenden Erfindung sind unter Oxymethylenpolyolen sowohl Oxymethylenpolyole mit einer Oxymethyleneinheit als auch Polyoxymethylenpolyole mit mindestens zwei direkt aufeinander folgenden Oxymethyleneinheiten zu verstehen.

Vorzugsweise weist das durch die Reaktion erhaltene Polyurethanpolymer einen Gehalt an aus dem Oxymethylenpolyol A), und/oder B) stammenden Oxymethylengruppen von > 0 bis ≤ 8 Gewichts-%, besonders bevorzugt von > 3 bis ≤ 6 Gewichts-%bezogen auf das Gesamtgewicht des Polyurethanpolymers, auf.

Die Isocyanatkomponente kann insbesondere ein aliphatisches oder aromatisches Di- oder Polyisocyanat umfassen. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4''-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≥ 8000 g/mol und OH-Funktionalitäten von ≥ 1,5 bis ≤ 6.

Im Fall des Polyols A) ist das Co-Monomer vorzugsweise ein Alkylenoxid, besonders bevorzugt Ethylenoxid, Propylenoxid und/oder Styroloxid.

Hinsichtlich des Formaldehyds in der Herstellung von Polyol A) lässt sich anmerken, dass Formaldehyd in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden kann. Bei Formaldehyd-Lösungen kann es sich um wässrige Formaldehyd-Lösungen mit einem Formaldehyd-Gehalt zwischen 1 Gew.-% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Hinsichtlich der oligomeren Formaldehyd-Vorstufe in der Herstellung von Polyol B) lässt sich anmerken, dass

als Formaldehyd-Quelle Substanzen zum Einsatz kommen können, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Dimethylacetal, 1,3-Dioxolan, 1,3-Dioxan und/oder 1,3-Dioxepan.

Hinsichtlich der Starterverbindung in der Herstellung von Polyol A) und Polyol B) lässt sich anmerken, dass es sich hierbei vorzugsweise um bi- oder höherfunktionelle Verbindungen mit einem zahlenmittleren Molekulargewicht $M_n$ von beispielsweise zwischen 100 und 3 000 g/mol handelt. Die Funktionalität wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Die Starterverbindungen haben typischerweise eine Funktionalität $\geq 2$, beispielsweise in einem Bereich von $\geq 2$ bis $\leq 6$, vorzugsweise von $\geq 2$ bis $\geq 4$ und besonders bevorzugt von $\geq 2$ bis $\geq 3$.

Vorzugsweise ist die Starterverbindung ausgewählt aus der Gruppe der Polyetherpolyole, Polyesterpolyole, Polyetheresterpolyole, Polycarbonatpolyole und/oder Polyacrylatpolyole.

Die Polyole können beispielsweise ein zahlenmittleres Molekulargewicht $M_n$ von $\geq 62$ g/mol bis $\leq 8000$ g/mol, bevorzugt von $\geq 90$ g/mol bis $\leq 5000$ g/mol und besonders bevorzugt von $\geq 92$ g/mol bis $\leq 2000$ g/mol aufweisen.

Die durchschnittliche OH-Funktionalität der Polyole ist $\geq 2$, beispielsweise in einem Bereich von $> 2$ bis $\geq 6$, vorzugsweise von $\geq 2{,}0$ bis $\geq 4$ und besonders bevorzugt von $\geq 2{,}0$ bis $\geq 3$.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten $M_n$ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Für die Herstellung der Polyole A) und/oder B) grundsätzlich geeignete Katalysatoren sind ausgewählt aus der Gruppe der basischen Katalysatoren und/oder der Lewis-sauren Katalysatoren. Als Katalysator werden Verbindungen eingesetzt, die die Polymerisation von Formaldehyd katalysieren. Hierbei kann es sich um basische Katalysatoren handeln oder um Lewis-saure Katalysatoren, die als Lewis-saures Zentrum z.B. ein Metall der dritten, vierten oder fünften Hauptgruppe, insbesondere Bor, Aluminium, Zinn oder Bismut, ein Metall der dritten oder vierten Nebengruppe oder der Reihe der Lanthanoide, Vanadium, Molybdän, Wolfram oder ein Metall der achten bis zehnten Nebengruppe enthalten. Bevorzugt sind Lewis-saure Katalysatoren.

Ausführungsformen und weitere Aspekte der vorliegenden Erfindung werden nachfolgend beschrieben. Sie können beliebig miteinander kombiniert werden, sofern sich aus dem Kontext nicht eindeutig das Gegenteil ergibt.

In einer Ausführungsform werden im Fall des Polyols A) in der Umsetzung des Formaldehyds mit der Starterverbindung das Formaldehyd in gasförmiger Form und ein Alkylenoxid als Comonomer eingesetzt.

In einer weiteren Ausführungsform wird in den Fällen des Polyols A) und/oder B) der mindestens eine Katalysator ausgewählt aus der Gruppe bestehend aus Alkalihydroxiden, Doppelmetallcyanidverbindungen, Zinnverbindungen, Bismutverbindungen und Lewis-Säuren.

Beispiele für besonders geeignete Katalysatoren sind Bismut(III)-Triflat ($Bi(OTf)_3$; $Bi(CF_3SO_3)_3$), Bismut(III)-Mesylat ($Bi(OMs)_3$; $Bi(CH_3SO_3)_3$), Bismut(III)-Tosylat ($Bi(OTs)_3$; $Bi(CH_3\text{-}C_6H_4\text{-}SO_3)_3$) und/oder Bismut-tri(2-ethylhexanoat), Dibutylzinndilaurat, Dibutylzinnoxid und Doppelmetallcyanidverbindungen der allgemeinen Formel $(Zn_3[Co(CN)_6]_2 \cdot aZnCl_2 \cdot bL^1 \cdot cL^2 \cdot dH_2O$, wobei $L^1$ und $L^2$ = Komplexierungsreagenzien und Dispergiermittel sind.

In einer weiteren Ausführungsform ist im Fall des Polyols A) das Comonomer Ethylenoxid, Propylenoxid und/oder Styroloxid.

Ein weiterer Aspekt der Erfindung ist ein Polyurethanpolymer, erhältlich durch ein erfindungsgemäßes Verfahren, mit einem Gehalt an Oxymethylengruppen von > 0 bis < 10 Gewichts-% bevorzugt > 0 bis ≤ 8 Gewichts-%, besonders bevorzugt von > 3 bis ≤ 6 Gewichts-% bezogen auf das Gesamtgewicht des Polyurethanpolymers.

Ein weiterer Aspekt der Erfindung ist ein Verfahren zur Aufarbeitung eines Polyols, umfassend die Schritte:

(i) Bereitstellen eines Polyols mit einem Gehalt an Oxymethylengruppen von > 0 bis < 10 Gewichts-%;
(ii) Einwirken einer Säure auf das Polyol aus Schritt (i);
(iii) Isolieren einer organischen Phase aus dem Produkt des Einwirkens der Säure auf das Polyol aus Schritt (ii).

Vorzugsweise weist das Polyol einen Gehalt an Oxymethylengruppen von > 0 bis ≤ 6 Gewichts-%, bezogen auf das Gesamtgewicht des Polyurethanpolymers, auf.
In einer Ausführungsform wird die Säure in wässriger Lösung eingesetzt.
In einer weiteren Ausführungsform weist die Säure einen $pK_A$-Wert von ≤ 4 auf. Bevorzugte Säuren sind Salzsäure, Schwefelsäure, Perchlorsäure, Trifluormethansulfonsäure und Methansulfonsäure.
In einer weiteren Ausführungsform wird das Einwirken der Säure auf das Polyol bei einer Temperatur von ≥ 30 °C bis ≤ 90 °C durchgeführt.
Ein weiterer Aspekt der Erfindung ist ein Verfahren zur Aufarbeitung eines Polyurethanpolymers, umfassend die Schritte:

(α) Bereitstellen eines Polyurethanpolymers mit einem Gehalt an Oxymethylengruppen von > 0 bis < 10 Gewichts-%;
(β) Einwirken einer Säure auf das Polyurethanpolymer aus Schritt (α);
(γ) Isolieren einer organischen Phase aus dem Produkt des Einwirkens der Säure auf das Polyurethanpolymer aus Schritt (β).

Vorzugsweise weist das Polyurethanpolymer einen Gehalt an Oxymethylengruppen von > 0 bis ≤ 6 Gewichts-%, bezogen auf das Gesamtgewicht des Polyurethanpolymers, auf.
In einer Ausführungsform ist das Polyurethanpolymer ein Polyurethanpolymer gemäß der vorliegenden Erfindung.
In einer weiteren Ausführungsform wird die Säure in wässriger Lösung eingesetzt.
In einer weiteren Ausführungsform weist die Säure einen $pK_A$-Wert von ≤ 4 auf. Bevorzugte Säuren sind Salzsäure, Schwefelsäure, Perchlorsäure, Trifluormethansulfonsäure und Methansulfonsäure.
In einer weiteren Ausführungsform wird das Einwirken der Säure auf das Polyol bei einer Temperatur von ≥ 30 °C bis ≤ 90 °C durchgeführt.
In einer weiteren Ausführungsform wird nach dem Isolieren der organischen Phase aus dem Produkt des Einwirkens der Säure auf das Polyurethanpolymer in der organischen Phase vorliegendes Polyol zumindest teilweise für die Herstellung eines Polyurethanpolymers eingesetzt.
Die vorliegende Erfindung wird durch die nachfolgenden Beispiele näher beschrieben, ohne jedoch darauf beschränkt zu sein.

## Beispiele

*Eingesetzt Starterverbindungen*

PET-1: difunktionelles Poly(oxypropylen)polyol mit einer OH-Zahl von 109,6 $mg_{KOH}$/g, woraus sich das zahlenmittlere Molekulargewicht $M_n$ = 1022 g/mol und die durchschnittliche Summenformel $HO(CH(CH_3)CH_2O)_{17,02}H$ ergibt. Per GPC gegen Polystyrol-Standards wurde ein zahlenmittleres Molekulargewicht $M_n$ = 1564 g/mol und ein Polydispersitätsindex PDI = 1,09 gemessen. Die Abweichung des per GPC ermittelten zahlenmittleren Molekulargewichts vom über die OH-Zahl ermittelten mittleren Molekulargewicht ist auf die Verwendung von Kalibrierstandards mit von PET-1 verschiedener Struktur (Polystyrol) zurückzuführen.
PET-2: trifunktionelles Poly(oxypropylen)polyol (Produkt PET-1110 der Firma Covestro AG) mit einer OH-Zahl von 231 $mg_{KOH}$/g, woraus sich das zahlenmittlere Molekulargewicht $M_n$ 728,6 g/mol ergibt.
PET-3: trifunktionelles Poly(oxypropylen)polyol (Produkt Arcol-1108 der Firma Covestro AG) mit einer OH-Zahl von 48 $mg_{KOH}$/g, woraus sich das zahlenmittlere Molekulargewicht $M_n$ 3500 g/mol ergibt.
PEC-2: trifunktionelles Poly(oxypropylen)carbonatpolyol (Desmophen Typ 04 der Firma Covestro AG) mit einem nominalen Molekulargewicht von 2000 g/mol, einem $CO_2$-Gehalt von 13,8 Gew.-% und einer nominalen OH-Zahl von 55,8 mgKOH/g, woraus sich ein mittleres Molekulargewicht M.W. = 3016,13 g/mol und ein durchschnittlicher Gehalt an eingebaute $CO_2$ von 20,03 Gew-% ergibt.

*Eingesetzt Polyisocyanate*

2,4-Toluylendiisocyanat: Sigma Aldrich ≥98 %

*Eingesetzte Additive*

Additiv B8239: Silicon-basiertes Tensid TEGOSTAB B8239 der Firma Evonik Industries AG.

*Beschreibung der Methoden:*

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Chloroform (GPC grade), Flussrate 1.0 ml/min; Säulenkombination: PSS SDV Vorsäule 8x50 mm (5 µm), 2x PSS SDV linear S 8x300 ml (5 µm). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.

$^{1}$H-NMR-Spektroskopie: Die Messungen erfolgten auf einem Bruker AV400 (400 MHz); die Kalibrierung der chemischen Verschiebungen erfolgte relativ zu Trimethylsilan als internem Standard ($\delta$ = 0.00 ppm) oder zum Lösungsmittelsignal ($CDCl_3$, $\delta$ = 7.26 ppm); s = Singulett, m = Multiplett, bs = verbreitertes Singulett, kb = komplexer Bereich. Die Angabe der Größe der Flächenintegrale der Signale erfolgt relativ zueinander.

Bei der Copolymerisation resultierte das Oxymethylenepolyetherpolyol, welches einerseits in der nachfolgenden Formel gezeigte Oxymethylene-Einheiten enthält,

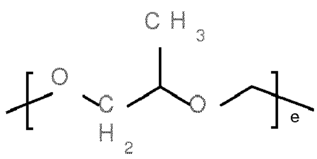

bzw.

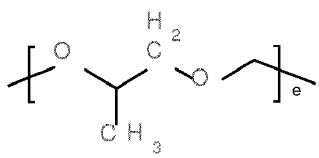

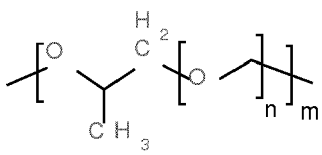

bzw.

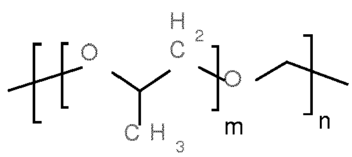

und andererseits in der nachfolgenden Formel gezeigte Polyether-Einheiten enthält.

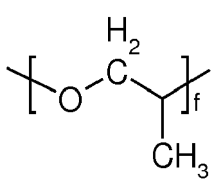

bzw.

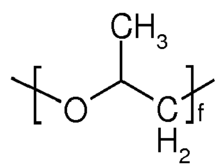

Das molare Verhältnis von Oxymethylengruppen (aus Formaldehyd) zu Ethergruppen im Oxymethylenpolyol sowie der Anteil des umgesetzten Formaldehyds (C in mol%) wurden mittels 1H-NMR Spektroskopie bestimmt.

Wenn die Copolymerisation von Formaldehyd und Propylenoxid in Gegenwart eines DMC Katalysator durchgeführt wurde, enthält das Polyol weiterhin die nachfolgend gezeigten Polycarbonat-Einheiten (PEC).

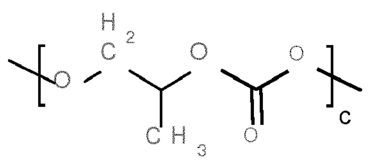

bzw.

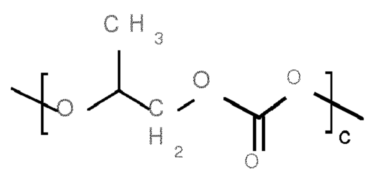

Die Probe wurde jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 0,79 - 1,3: Methylgruppe der Polyether-Einheiten, Fläche der Resonanz entspricht drei H Atomen

12: 1,25 - 1,32: Methylgruppe der Polycarbonat-Einheiten, Fläche der Resonanz entspricht drei H Atomen (Wenn PEC Einheiten anwesend sind).

13: 3,093-4,143: CH- und $CH_2$- Gruppe der Polyether-Einheiten, Fläche der Resonanz entspricht drei H Atomen

14: 4,40-5,20: Methylengruppe der Oxymethylen-Einheiten, Fläche der Resonanz entspricht zwei H Atomen

Angegeben sind das molare Verhältnis Oxymethylengruppen zu Ethergruppen im Oxymethylenpolyol sowie der Anteil des umgesetzten Propylenoxids (C in mol%).

Unter Berücksichtigung der relativen Intensitäten, errechnet sich der relative Anteil $n_i$ der einzelnen Struktureinheiten i mit den Integralen $I_i$ nach:

(PO): n1 = I1/3(PEC): n2 = 12/3
($CH_2O$): n4 = 14/2

Molares Verhältnis von Oxymethylengruppen zu Ethergruppen im Polyol:

($CH_2O$)/(PO) = (I4/2)/(I1/3) = n4/n1 Der molare Anteil des umgesetzten Formaldehyds (C in mol%) bezogen auf die Summe der bei der Aktivierung und der Copolymerisation eingesetzten Menge an Propylenoxid, berechnet sich nach der Formel:

$$C = [\ (I4/2) / (\ (I1/3) + (I2/3) + (I3/3) + (I4/2))\ ] * 100\%$$

Die Signale für $CH_2O$ und PEC-CH (wenn PEC anwesend ist) überlappen teilweise. Deshalb werden alle Flächenintegrale dieser Signale aufsummiert und um den PEC-CH Anteil korrigiert.

Die Zuordnung der Signale gilt entsprechend für Carbonsäure-terminierte Copolymere.

Bei Abwesenheit von unterschiedlichen Endgruppen kann für F-funktionelle (wobei F für bihydroxyfunktionelle Polyole 2 ist, und für trifunktionelle Polyole 3 ist) Oxymethylenpolyole die durchschnittliche Summenformel mit Hilfe des per OH-Zahl ermittelten durchschnittlichen Molekulargewichtes M.W. errechnet werden nach:

$$MW = (F \times 1000 \times MW_{KOH}) / (OH\text{-}Zahl)$$

$$f = MW / \Sigma((I_i/\#H_i) * MW_i)$$

wobei $I_i$ ist die Summe der Integralen der Einheit "i" und $\#H_i$ ist die Zahl der Protonen in Einheit "i".

Multiplikation des erhaltenen Faktors f mit den relativen Anteilen $n_i$ (i = PE, PEC, $CH_2O$) ergibt die durchschnittliche Anzahl $x_i$ der Einheiten i in der durchschnittlichen Summenformel

$$\#PO: ((I1/3) \times f) - (\#PO)_{starter}$$

$$\#(CH_2O) : (I4/2) \times f$$

$^{13}$C-NMR-Spektroskopie: Die Messungen erfolgten auf einem Bruker AV400 (100 MHz); die Kalibrierung der chemischen Verschiebungen erfolgte relativ zu Trimethylsilan als internem Standard ($\delta$= 0.00 ppm) oder zum Lösungsmittelsignal ($CDCl_3$, $\delta$ = 77.16 ppm); CPD (composite pulse decoupling); dept45 (APT (attached proton test): $CH_2$, Cquart: positives

Signal (+); CH, $CH_3$: negatives Signal (-); HMBC: Hetero multiple bond correlation; HSQC: Heteronuclear singlequantum correlation.

Infrarot (IR)-Spektroskopie: Die Messungen erfolgten auf einem Bruker Alpha-P FT-IR-Spektrometer; die Messungen erfolgten in Reinsubstanz; Signalintensitäten: vs = very strong, s = strong, m = medium, w = weak, vw = very weak; b = verbreiterte Bande.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mgKOH/g" bezieht sich auf mg[KOH]/g[Polyol]. Das durchschnittliche Molekulargewicht M.W. errechnet sich aus der OH-Zahl nach M.W. = (56 g/mol / OH-Zahl) $\times$ 1000 mg/g $\times$ F, wobei F für die durchschnittliche OH-Funktionalität steht, welche durch die OH-Funktionalität des Startermoleküls vorgegeben ist.

Die Säurezahl wurde in Anlehnung an (DIN EN ISO 2114) bestimmt, wobei jedoch mit einer 0.5 molaren methanolische Kaliumhydroxid-Lösung anstelle einer ethanolischen Kaliumhydroxid-Lösung titriert wurde. Die Endpunktserkennung erfolgte mittels Potentiometrie. Die Angabe der Einheit in "mgKOH/g" bezieht sich auf mg[KOH]/g[Polysäure]. Das durchschnittliche Molekulargewicht M.W. errechnet sich aus der Säurezahl-Zahl nach M.W. = (56 g/mol / SäureZahl) x 1000 mg/g $\times$ F, wobei F für die durchschnittliche Säure-Funktionalität steht, welche durch die OH-Funktionalität des Startermoleküls vorgegeben ist.

Die Bestimmung der Viskosität erfolgte auf einem Physica MCR 501 Rheometer der Fa. Anton Paar. Es wurde eine Kegel-Platte-Konfiguration mit einem Abstand von 50 $\mu$m gewählt (Messsystem DCP25). 0,1 g der Substanz wurde auf der Rheometerplatte aufgebracht und bei 25 °C einer Scherung von 0,01 bis 1000 l/s unterworfen und für 10 min alle 10 s die Viskosität gemessen. Angegeben ist die über alle Messpunkte gemittelte Viskosität. Alternativ erfolgte die Bestimmung der Viskosität auf einem DMA 4500 M Viscometer der Firma Anton Paar.

TGA (Thermogravimetrische Analysen) wurden mit einem Mettler Toledo TGA/DSC 1 durchgeführt. Es wurden zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Für die Reaktionen wurde eine Versuchsapparatur verwendet, die aus einem 970 ml Edelstahlautoklaven ("Depolymerisationsreaktor" R1) und einem 1700 ml Edelstahlautoklaven ("Polymerisationsreaktor" R2) bestand, welche über eine beheizbare und mit einem Ventil absperrbare Brücke zum Transfer des in R1 generierten Formaldehyd-Gases miteinander verbunden waren. Die Brücke bestand aus zwei beheizbaren 1/4-Zoll-Kapillaren, die über einen beheizbaren 200 ml Edelstahlbehälter verbunden waren, welcher mit 100 g wasserfreiem Molsieb A3 als Wasser-Absorber befüllt war. Beide Reaktoren waren mit Hohlwellenrührer und Manometer ausgestattet und unabhängig voneinander beheizbar. Die Gaszufuhr zu R1 erfolgte über ein Tauchrohr. Die Dosiergeschwindigkeit wurde mit einem Massenflussregler (MFC 1, Kapazität: 6 l/min, für Argon bzw. Stickstoff als Trägergas) oder einem Coriolis-Flussregler (CFC1, Kapazität: 700 g/h, für $CO_2$ als Trägergas) geregelt. Der mit Formaldehyd angereicherte Gasstrom wurde durch die Brücke von R1 in R2 geleitet. R2 verfügte über eine zusätzliche Gaszufuhr für $CO_2$, deren Dosiergeschwindigkeit über einen separaten Coriolis-Flussregler (CFC2, Kapazität: 700 g/min) reguliert wurde. Zusätzlich verfügte R2 über eine Flüssigzuleitung, über die Epoxid zudosiert wurde. Die Zudosierung des Epoxides erfolgte durch Beaufschlagung des Epoxid-Vorratsgefäßes mit Stickstoffgas unter einem Druck, der mindestens 10 bar über dem Reaktionsdruck p lag, wobei der Massenstrom durch einen Coriolis-Flussregler (CFC3, Kapazität: 200 g/min) geregelt wurde. Eine dritte Zuleitung erlaubte die Zudosierung weiterer Flüssigreagenzien über eine HPLC-Pumpe. An R2 befand sich eine beheizbare 1/4-Zoll-Kapillare als Gasauslass, die mit einem beheizbaren Hinterdruckregler (back pressure regulator, BPR) versehen war, welcher einen konstanten Druck p im Reaktorsystem gewährleistete.

Die in den Beispielen eingesetzten Druchreaktoren hatte eine Höhe (innen) von 21 cm (R1) bzw. 15 cm (R2) und einen Innendurchmesser von 10 cm (R1 und R2). Die Reaktoren waren ausgestattet mit einem elektrischen Heizmantel (150 Watt maximale Heizleistung). Weiterhin waren die Reaktoren mit einem Einleitrohr sowie je einem Thermofühler mit 6 mm Durchmesser ausgestattet, der bis 60 mm über den Boden in den Reaktor ragte.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 50 mm und eine Höhe von 19 mm. An jedem Ende des Arms war ein Gasauslass angebracht, der einen Durchmesser von 3 mm aufwies. Durch die Drehung des Rührers entstand ein Unterdruck derart, dass das über der Reaktionsmischung befindliche Gas ($CO_2$ und/oder Argon oder Stickstoff und ggf. Formaldehyd) abgesaugt wurde und über die Hohlwelle des Rührers in die Reaktionsmischung eingeleitet wurde.

Polyol A: Herstellung eines statistischen Epoxid-Aldehyd Copolymers bei einer Temperatur von 60°C unter Einsatz eines Bismut-Katalysators

In R1 wurden 500,5 g (16,68 mol) Paraformaldehyd, 8,8 g (27 mmol) 4-Dodecylbenzolsulfonsäure, 13,1 g (92 mmol) Phosphorpentoxid und 151 g Paraffinöl vorgelegt. Das Gemisch wurde bei 100 U/min gerührt. In R2 wurden 302,6 g PET-2 (0,42 mol), 4,3 g (7 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt.

Nach Erreichen des Nenndrucks und der Solltemperaturen für Brücke, R2, Gasauslass und BPR wurde der Innenraum von R1 auf 110 °C geheizt und über 24 h gasförmiges Formaldehyd in R2 eingeleitet. Das Trägergas wurde auf 150 g/h eingestellt und zusammen mit dem Systemdruck über die Reaktionszeit konstant gehalten. Während der Polymerisationsreaktion wurden 122,57 g (2,11 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 74,54 g (1,28 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) $Na_2S_2O_3 \cdot 5\ H_2O$ in 27 ml Wasser mit einer Flussrate von 5 ml/min über die HLPLC-Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1301,4 mPa· s

Per thermogravimetrischer Analyse (TGA) wurden drei Zersetzungsstufen ermittelt:

Stufe 1: Zersetzungstemperatur 134,55 °C (relativer Gewichtsverlust 2,32%)

Stufe 2: Zersetzungstemperatur 241,19 °C (relativer Gewichtsverlust 1,19%)

Stufe 3: Zersetzungstemperatur 344,35 °C (relativer Gewichtsverlust 75,90%)

Per Gel-Permeations-Chromatographie (GPC) gegen Polystyrol-Standards wurde ein zahlenmittleres Molekulargewicht $M_n$ = 2421,3 g/mol und ein Polydispersitätsindex PDI = 2,61 ermittelt.

Die OH Zahl ist 78,34 mg KOH/g, die dem Molekulargewicht von 2148,33 g/mol entspricht.

$^1$H-NMR-Spektroskopie (400 MHz, $CDCl_3$): $\delta$ = 0,84-1,3 (m, 3 H, PO-$CH_3$ /PET-2-$CH_3$), 3,14 (m, 0,05 H, PO-CH/PO-$CH_2$/PET-2-$CH_2$/ PET-2-CH), 3,25-3,78 (m, 3,18 H, PO-CH/PO-$CH_2$/PET-2-$CH_2$/ PET-2-CH), 3,79-4 (m, 0,176 H, PO-CH/PO-$CH_2$/PET-2-$CH_2$/ PET-2-CH), 4,59-4,87 (m, 0,0,211 H, $OCH_2O$) ppm.

$^{13}$C-CPD-NMR-Spektroskopie (100 MHz, $CDCl_3$): $\delta$ = 16,68; 16,92; 17,43; 17,59; 18,15; 18,20; 18,49; 55,13; 65,52; 67,2; 71,48; 71,66; 71,66; 71,76; 72,78; 73,03; 73,34; 73,73; 74,26; 74,59; 74,84; 74,59; 74,84; 75,08; 75,28; 75,47; 75,81; 76,79 ($CDCl_3$), 77,10 ($CDCl_3$), 77,43 ($CDCl_3$), 78,48, 92,34 (O-$CH_2$-O), 92,72 (O-$CH_2$-O); 94,38 (O-$CH_2$-O), 95,73 (O-$CH_2$-O), 96,6 (O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1$H-NMR-Spektroskopie und dem durch die GPC ermittelten Molekulargewicht: $PO_{27,2}$-PET1110-$(CH_2O)_{3,7}$. Das Produkt enthält somit durchschnittlich 3,7 Oxymethylengruppen pro Molekül.

IR-Spektroskopie: $\nu$ = 3473,63 (br, OH); 2969,51; 2929,86; 2870,38; 1724,78 (vw); 1452,89; 1373,59; 1343,85; 1295,71; 1090,38; 1033,73; 923,28; 865,22; 640,07; 519,70; 446,06 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

Polyol B: Herstellung eines statistischen Epoxid-Aldehyd Copolymers bei einer Temperatur von 60°C unter Einsatz eines Zinn und eines Bismut-Katalysators im Verhältnis 1:1

In R1 wurden 746,75 g (24,9 mol) Paraformaldehyd, 8,95 g (25,6 mmol) 4-Dodecylbenzolsulfonsäure, 33,51 g (0,24 mol) Phosphorpentoxid und 116 g Paraffinöl vorgelegt. Das Gemisch wurde bei 100 U/min gerührt. In R2 wurden 298,23 g PET-2 (0,41 mol), 1,95 g (3,1 mmol) Dibutylzinndilaurat (DBTL) und 2,05 g (3,12 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt. Nach Erreichen des Nenndrucks und der Solltemperaturen für Brücke, R2, Gasauslass und BPR wurde der Innenraum von R1 auf 110 °C geheizt und über 24 h gasförmige Formaldehyd in R2 eingeleitet. Das Trägergas wurde auf 150 g/h eingestellt und zusammen mit dem Systemdruck über die Reaktionszeit konstant gehalten.

Während des Prozesses wurden 180,25 g (3,10 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 39,25 g (0,68 mol) Propylenoxid (60 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,7 g (27 mmol) $Na_2S_2O_3 \cdot 5\ H_2O$ in 27 ml Wasser mit einer Flussrate von 5 ml/min über die HPLC-Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose gelbe Flüssigkeit mit darin verteilten schwarzen Partikeln erhalten, welche mittels Druckfiltration entfernt wurden. Das so erhaltene Produkt war ein transparentes, leicht gelbes Öl.

Es sei angemerkt, dass bei dem während der Reaktion herrschenden $CO_2$-Partialdruck kein Einbau von $CO_2$ in die Polymerkette stattfand.

Viskosität: 853,9 mPa· s

Per thermogravimetrischer Analyse (TGA) wurden zwei Zersetzungsstufen ermittelt:

Stufe 1: Zersetzungstemperatur 164,95 °C (relativer Gewichtsverlust 10,22%)

Stufe 2: Zersetzungstemperatur 341,77°C (relativer Gewichtsverlust 69,38%)

Per Gel-Permeations-Chromatographie (GPC) gegen Polystyrol-Standards wurde ein zahlenmittleres Molekulargewicht $M_n$ = 1801 g/mol und ein Polydispersitätsindex PDI = 2,4 ermittelt.

Die OH-Zahl ist: 79,6 mg KOH/g, die dem Molekulargewicht von 2114,3 entspricht.

$^1$H-NMR-Spektroskopie (400 MHz, $CDCl_3$): $\delta$ = 0,85-1,22 (m, 3 H, PO-$CH_3$ /PET-2-$CH_3$), 3,09 (m, 0,05 H, PO-CH/PO-$CH_2$/PET-2-$CH_2$/ PET-2-CH), 3,18-3,71 (m, 3,17 H, PO-CH/PO-$CH_2$/PET-2-$CH_2$/ PET-2-CH), 3,8 (m, 0,26 H, PO-CH/PO-$CH_2$/PET-2-$CH_2$/ PET-2-CH), 4,49-4,9 (m, 0,53 H, $OCH_2O$), 4,9-5,16 (m, 0,02 H, $OCH_2O$) ppm.

$^{13}$C-CPD-NMR-Spektroskopie (100 MHz, $CDCl_3$): $\delta$ = 16,45; 16,61; 16,82; 17,19; 17,30; 17,47; 18,06; 18,2; 18,47, 18,82, 55,62, 65,51, 65,92, 66,3, 67,04, 71,33, 71,61, 72,15, 72,75, 73,02, 73,22, 74,15, 74,28, 74,58, 74,79, 75,02, 75,22, 75,39, 75,74, 76,49, 76,9 ($CDCl_3$), 77,2 ($CDCl_3$), 77,5 ($CDCl_3$), 78,3, 89,9 (O-$CH_2$-O), 90,7 (O-$CH_2$-O), 91,1 (O-$CH_2$-O), 91,7 (O-$CH_2$-O), 92,3 (O-$CH_2$-O), 92,7 (O-$CH_2$-O), 93,6 (O-$CH_2$-O), 94,2 (O-$CH_2$-O), 94,4 (O-$CH_2$-O), 95,0 (O-$CH_2$-O), 95,4 (O-$CH_2$-O), 96,4 (O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1$H-NMR-Spektroskopie und dem durch die OH-Zahl ermittelten Molekulargewicht: $PO_{19,9}$-PET1110-$(CH_2O)_{7,6}$. Das Produkt enthält somit durchschnittlich 7,6 Oxymethylengruppen pro Molekül.

IR-Spektroskopie: $\nu$ = 3453,81 (br, OH), 2871,8, 2970,92, 1726,19 (vw), 1452,89, 1373,59, 1297,12, 1093,21, 1032,32, 989,84, 921,86, 856,22, 819,91, 458,81 $cm^{-1}$.

Das IR-Spektrum ist weder identisch mit dem IR-Spektrum von Paraformaldehyd, noch mit dem IR-Spektrum von PET-2. Das Auftreten einer Bande bei 922 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

Polyol C: Herstellung eines statistischen Epoxid-Aldehyd Copolymers bei einer Temperatur von 60°C unter Einsatz eines Zinn und eines Bismut-Katalysators im Verhältnis 3:1

In R1 wurden 474,04 g (15,8 mol) Paraformaldehyd, 8,08 g (25 mmol) 4-Dodecylbenzolsulfonsäure, 20,39 g (144 mmol) Phosphorpentoxid und 150 g Paraffinöl vorgelegt. Das Gemisch wurde bei 100 U/min gerührt. In R2 wurden 293,95 g PET-2 (0,4 mol), 3,09 g (4,9 mmol) Dibutylzinndilaurat (DBTL) und 1,0 g (1,5 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt. Nach Erreichen des Nenndrucks und der Solltemperaturen für Brücke, R2, Gasauslass und BPR wurde der Innenraum von R1 auf 110 °C geheizt und über 24 h gasförmige Formaldehyd in R2 eingeleitet. Das Trägergas wurde auf 150 g/h eingestellt und zusammen mit dem Systemdruck über die Reaktionszeit konstant gehalten.

Während des Prozesses wurden 145,85 g (2,51 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 88,55 g (1,52 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) $Na_2S_2O_3 \cdot 5\ H_2O$ in 10 ml Wasser mit einer Flussrate von 5 ml/min über die HLPLC Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1297,1 mPa· s (bei 25 °C)

Per thermogravimetrischer Analyse (TGA) wurden zwei Zersetzungsstufen ermittelt:

Stufe 1: Zersetzungstemperatur 174 °C (relativer Gewichtsverlust 6,7%)

Stufe 2: Zersetzungstemperatur 345,5 °C (relativer Gewichtsverlust 78,3%)

Per Gel-Permeations-Chromatographie (GPC) gegen Polystyrol-Standards wurde ein zahlenmittleres Molekulargewicht $M_n$ = 2269,3 g/mol und ein Polydispersitätsindex PDI = 4,7 ermittelt.

Die OH Zahl ist 100,75 mg KOH/g, die dem Molekulargewicht von 1670,47 g/mol entspricht.

$^1$H-NMR-Spektroskopie (400 MHz, $CDCl_3$): $\delta$ = 0,82-1,33 (m, 3 H, PO-$CH_3$ /PET-2-$CH_3$), 3,05-4,01 (m, 3,29 H, PO-CH/PO-$CH_2$/PET-2-$CH_2$/ PET-2-CH), 4,58-5,03 (m, 0,34 H, $OCH_2O$) ppm.

$^{13}$C-CPD-NMR-Spektroskopie (100 MHz, $CDCl_3$): $\delta$ = 15,97; 16,19; 16,4; 16,46; 16,6; 16,82; 16,87; 17,1; 17,21; 17,32; 17,49; 17,98; 18,04; 18,07; 18,31; 18,46; 18,51; 18,74; 70,74; 71,36; 71,70; 71,76; 72,73; 73,0; 74,18; 74,6; 74,79; 75,04; 75,23; 75,41; 75,8; 75,85; 78,41; 89,83 (O-$CH_2$-O), 90,43 (O-$CH_2$-O); 90,69 (O-$CH_2$-O); 91,08 (O-$CH_2$-O); 91,61 (O-$CH_2$-O); 92,24 (O-$CH_2$-O), 92,57 (O-$CH_2$-O), 93,31 (O-$CH_2$-O); 94,68 (O-$CH_2$-O); 95,26 (O-$CH_2$-O); 95,65 (O-$CH_2$-O) ppm.

Das Auftreten einer Vielzahl an Signalen im $^1$H-NMR-Spektrum im Bereich 4,5 bis 5,5 ppm, sowie einer Vielzahl an Signalen mit positiver Polarität im $^{13}$C APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1$H-NMR-Spektroskopie und dem durch die GPC ermittelten Molekulargewicht: $PO2_{3,46}$-PET1110-$(CH_2O)_{5,86}$. Das Produkt enthält somit durchschnittlich 5,86 Oxymethylengruppen pro Molekül.

IR-Spektroskopie: $\nu$ = 3465,13 (br, OH); 2969,51; 2929,86; 2870,38; 1727,61 (vw); 1454,31; 1373,59; 1343,85; 1297,12; 1091,79; 1032,32; 988,42; 924,70; 865,22; 640,97; 525,36; 457,39 $cm^{-1}$.

Das IR-Spektrum ist weder identisch mit dem IR-Spektrum von Paraformaldehyd, noch mit dem IR-Spektrum von PET-2. Das Auftreten einer Bande bei 926 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

Polyol D: Herstellung eines statistischen Epoxid-Aldehyd Copolymers bei einer Temperatur von 60°C unter Einsatz eines Zinn und eines Bismut-Katalysators im Verhältnis 1:3

In R1 wurden 474,04 g (15,8 mol) Paraformaldehyd, 8,08 g (25 mmol) 4-Dodecylbenzolsulfonsäure, 20,39 g (144 mmol) Phosphorpentoxid und 150 g Paraffinöl vorgelegt. Das Gemisch wurde bei 100 U/min gerührt. In R2 wurden 293,95 g PET-2 (0,4 mol), 1,7 g (3,0 mmol) Dibutylzinndilaurat (DBTL) und 3,62 g (6,0 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt. Nach Erreichen des Nenndrucks und der Solltemperaturen für Brücke, R2, Gasauslass und BPR wurde der Innenraum von R1 auf 110 °C geheizt und über 24 h gasförmige Formaldehyd in R2 eingeleitet. Das Trägergas wurde auf 150 g/h eingestellt und zusammen mit dem Systemdruck über die Reaktionszeit konstant gehalten.

Während des Prozesses wurden 145,85 g (2,51 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt und direkt in der Brücke. Anschließend wurden 88,55 g (1,52 mol) Propylenoxid (40 g/h) in R2 vorgegeben. Im Anschluss wurde das Reaktionsgemisch in R2 bei 25 °C mit 1000 U/min 60 h nachgerührt. Anschließend wurde unter Rühren eine Lösung von 6,01 g (32 mmol) $Na_2S_2O_3 \cdot 5\,H_2O$ in 10 ml Wasser mit einer Flussrate von 5 ml/min über die HLPLC Pumpe in R2 eingeleitet. Das Gemisch wurde 1 h nachgerührt. Der Überdruck wurde über den BPR abgelassen und das Reaktionsgemisch aus dem Reaktor entnommen.

Als Rohprodukt wurde eine viskose Flüssigkeit mit darin verteilten schwarz-braunen Partikeln erhalten, welche mittels Druckfiltration entfernt wurden. Nach Aufarbeitung erhielt man ein leicht gelbes Öl.

Es sei angemerkt, dass bei dem während der Reaktion herrschenden $CO_2$-Partialdruck kein Einbau von $CO_2$ in die Polymerkette stattfand.

Viskosität: 1307 mPa· s (bei 25 °C)

Per thermogravimetrischer Analyse (TGA) wurden zwei Zersetzungsstufen ermittelt:

Stufe 1: Zersetzungstemperatur 268,14 °C (relativer Gewichtsverlust 7,4%)

Stufe 2: Zersetzungstemperatur 352,28 °C (relativer Gewichtsverlust 87,8%)

Per Gel-Permeations-Chromatographie (GPC) gegen Polystyrol-Standards wurde ein zahlenmittleres Molekulargewicht $M_n$ = 2269,3 g/mol und ein Polydispersitätsindex PDI = 4,7 ermittelt.

Die OH Zahl ist 82,10 mg KOH/g, die dem Molekulargewicht von 2049,94 g/mol entspricht.

$^1H$-NMR-Spektroskopie (400 MHz, $CDCl_3$): $\delta$ = 0,894-1,31 (m, 3 H, PO-$CH_3$ /PET-2-$CH_3$), 3,08-3,2 (m, 0,054 H, PO-CH/PO-$CH_2$/PET-2-$CH_2$/ PET-2-CH), 3,24-3,78(m, 3,18 H, PO-CH/PO-$CH_2$/PET-2-$CH_2$/ PET-2-CH), 3,79-4(m, 0,168 H, PO-CH/PO-$CH_2$/PET-2-$CH_2$/ PET-2-CH), 4,55-4,90 (m, 0,198 H, $OCH_2O$), 5,08 (m, 0,019 H, $OCH_2O$) ppm.

$^{13}C$-CPD-NMR-Spektroskopie (100 MHz, $CDCl_3$): $\delta$ = 17,29; 18,16; 18,56; 55,14; 65,54; 66,12; 67,10; 71,59; 72,86; 73,45; 75,40; 75,99; 76,67; 78,53; 92,39 (O-$CH_2$-O), 94,45 (O-$CH_2$-O); 95,91 (O-$CH_2$-O); 96,69 (O-$CH_2$-O) ppm.

Das Auftreten einer Vielzahl an Signalen im $^1H$-NMR-Spektrum im Bereich 4,5 bis 5,5 ppm, sowie einer Vielzahl an Signalen mit positiver Polarität im $^{13}C$ APT-NMR-Spektrum im Bereich 89,1 bis 96,5 ppm zeigt das Vorliegen chemisch nicht-äquivalenter Oxymethylengruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1H$-NMR-Spektroskopie und dem durch die GPC ermittelten Molekulargewicht: $PO_{38,21}$-PET1110-$(CH_2O)_{4,8}$. Das Produkt enthält somit durchschnittlich 4,8 Oxymethylengruppen pro Molekül.

IR-Spektroskopie: $\nu$ = 3470,80 (br, OH); 2969,51; 2929,86; 2868,97; 1724,78 (vw); 1452,89; 1373,59; 1343,85; 1297,12; 1091,79; 1036,57; 923,28; 863,81; 665,55 $cm^{-1}$.

Das IR-Spektrum ist weder identisch mit dem IR-Spektrum von Paraformaldehyd, noch mit dem IR-Spektrum von PET-2. Das Auftreten einer Bande bei 923 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyetherpolyol mit statistischen Formaldehyd/Propylenoxid-Blöcken.

Polyol E: Herstellung eines statistischen Epoxid-Aldehyd Copolymers bei einer Temperatur von 60°C unter Einsatz eines Zinn und eines Bismut-Katalysators und eines Polyethercarbonatpolyols als Starter-Verbindung

In R1 wurden 500,4 g (16,68 mol) Paraformaldehyd, 15,3 g (0,048 mmol) 4-Dodecylbenzolsulfonsäure, 8,02 g (0,056 mol) Phosphorpentoxid und 151 g Paraffinöl vorgelegt. Das Gemisch wurde bei 100 U/min gerührt. In R2 wurden 300,4 g PEC-2 (0,1 mol), 2,04 g (3,2 mmol) Dibutylzinndilaurat (DBTL) und 2,03 g (3,1 mmol) Bismuttriflat ($Bi(OTf)_3$) vorgelegt. Das Gemisch wurde bei 1000 U/min gerührt. Der Nenndruck des BPR wurde auf P=20 bar eingestellt und das Gesamtsystem bei geöffneter Brücke über CFC1 mit $CO_2$ bis zum Nenndruck beaufschlagt. Die Brücke wurde vor dem Absorber auf 150 °C, Absorber auf 200 °C und Überleitung zu R2 auf 120 °C geheizt. Der Innenraum von R2 wurde auf 60 °C, die Gasauslass-Kapillare auf 120 °C und der BPR auf 150 °C geheizt. Nach Erreichen des Nenndrucks und der Solltemperaturen für Brücke, R2, Gasauslass und BPR wurde der Innenraum von R1 auf 120 °C geheizt und über 24 h gasförmige Formaldehyd in R2 eingeleitet. Das Trägergas wurde auf 150 g/h eingestellt und zusammen mit dem Systemdruck über die Reaktionszeit konstant gehalten.

Während des Prozesses wurden 135,0 g (2,32 mol) Propylenoxid in R2 eingeleitet mit einer Flussrate von 40 g/h.

Nach 24 h wurde R1 abgekühlt und die Leitung geschlossen. Das Trägergas wurde auf $N_2$ gewechselt. Anschließend wurden 18,19 g (0,31 mol) Propylenoxid (40 g/h) in R2 vorgegeben. Im Anschluss wurde das Reaktionsgemisch in R2 bei 25 °C mit 1000 U/min 12 h nachgerührt. Anschließend wurden 250 ml Wasser in R2 zugegeben und das Gemisch wurde 24 h nachgerührt. Der Überdruck wurde über den BPR abgelassen und das Reaktionsgemisch aus dem Reaktor entnommen.

Als Rohprodukt wurde eine viskose gelbe Flüssigkeit mit darin verteilten schwarzen Partikeln erhalten, welche mittels Druckfiltration entfernt wurden. Das so erhaltene Produkt war ein transparentes, braunartiges gelbes Öl.

Es sei angemerkt, dass bei dem während der Reaktion herrschenden $CO_2$-Partialdruck kein Einbau von $CO_2$ in die Polymerkette stattfand.

Per thermogravimetrischer Analyse (TGA) wurde eine Zersetzungsstufe ermittelt:

Zersetzungstemperatur: 316,32 °C (relativer Gewichtsverlust 91,8%)

Per Gel-Permeations-Chromatographie (GPC) gegen Polystyrol-Standards wurde ein zahlenmittleres Molekulargewicht $M_n$ = 4849 g/mol und ein Polydispersitätsindex PDI = 2,19 ermittelt.

Die OH Zahl ist 41,3 mg KOH/g, die dem Molekulargewicht von 4079,34 entspricht.

$^1H$-NMR-Spektroskopie (400 MHz, $CDCl_3$): $\delta$ = 0,988-1,159 (m, 1 H, PO-$CH_3$ /PEC-2-$CH_3$), 1,16-1,33 (m, 0,41 H, PO-$CH_3$ /PEC-2-$CH_3$), 3,032-3,715 (m, 1,136 H, PO-CH/PO-$CH_2$/PEC-2-$CH_2$/ PEC-2-CH), 3,72-4,24 (m, 0,224 H, PO-CH/PO-$CH_2$/PEC-2-$CH_2$/ PEC-2-CH), 4,44-5,045 (m, 0,21 H, $OCH_2O$/ PEC-2-$CH_2$) ppm.

$^{13}C$-CPD-NMR-Spektroskopie (100 MHz, $CDCl_3$): $\delta$ = 16,26; 16,652; 17,15; 17,27; 17,41; 18,12; 18,44; 18,53; 55,126; 66,26; 68,82; 70,31; 70,37; 71,20; 71,72; 72,91; 73,05; 73,34; 73,49; 73,75; 74,01; 75,07; 75,26; 75,35; 75,44; 75,79; 77,13 ($CDCl_3$), 77,33 ($CDCl_3$), 77,45 ($CDCl_3$), 92,3 (O-$CH_2$-O), 93,44 (O-$CH_2$-O), 94,33 (O-$CH_2$-O), 95,673 (O-$CH_2$-O), 154,18 (C=O); 154,44 (C=O); 154,71 (C=O); 154,88 (C=O) ppm.

Das Auftreten einer Vielzahl an Signalen im $^1H$-NMR-Spektrum im Bereich 4,5 bis 5,5 ppm, sowie einer Vielzahl an Signalen mit positiver Polarität im $^{13}C$ APT-NMR-Spektrum im Bereich 89,1 bis 96,5 ppm zeigt das Vorliegen chemisch nicht-äquivalenter Oxymethylen-Gruppen $(CH_2O)_n$ in einer nicht-alternierenden Art und Weise mit unterschiedlicher Kettenlängen. Insbesondere das Nicht-Alternieren konnte gut im 2D-NMR-Spektrum beobachtet werden.

Die durchschnittliche Summenformel beträgt laut $^1H$-NMR-Spektroskopie und dem durch die OH-Zahl ermittelten Molekulargewicht: $PO_{15,78}$-PEC-2-$(CH_2O)_{5,83}$. Das Produkt enthält somit durchschnittlich 5,8 Oxymethylengruppen pro Molekül.

IR-Spektroskopie: $\nu$ = 3459,47 (w, br, OH), 2972,34; 2932,69; 2874,63; 1804,08; 1741,77 (C=O); 1454,31; 1375,01; 1250,39; 1091,79; 968,59; 928,94; 855,31; 788,75; 734,94; 702,37 $cm^{-1}$.

Das IR-Spektrum ist weder identisch mit dem IR-Spektrum von Paraformaldehyd, noch mit dem IR-Spektrum von PEC-2. Das Auftreten einer Bande bei 929 $cm^{-1}$ weist auf das Vorliegen von Oxymethylengruppen hin.

Sowohl die NMR- als auch die IR-spektroskopischen Daten belegen zweifelsfrei die Zusammensetzung des Produktes aus Polyethercarbonat mit statistischen Formaldehyd/Propylenoxid-Blöcken.

Copolymer F: Herstellung eines Epoxid-Aldehyd-Copolymers mit terminalen Carbonsäuregruppen bei einer Temperatur von 60°C unter Einsatz eines Zinn-Katalysators in Gegenwart von DMC-Katalysator

In R1 wurden 180,33 g (6,011 mol) Paraformaldehyd, 4,18 g (0,013 mol) 4-Dodecylbenzolsulfonsäure, 3,2 g (0,011 mol) Phosphorpentoxid und 100,05 g Paraffin vorgelegt. In R2 wurden 248,5g PET-1 und 0,105g DMC-Katalysator vorgelegt. Der BPR wurde auf 1 bar Solldruck eingestellt und der Reaktor bei geöffnetem Gasauslass 10 min mit Argon gespült. Anschließend wurde R2 mit einer Membranpumpe bei 50 mbar Pumpenvakuum evakuiert und der Reaktor auf

130 °C Innentemperatur geheizt. Nach Erreichen der Temperatur wurde die Evakuierung für 30 min fortgesetzt. Anschließend wurde die Verbindung zur Vakuumpumpe unterbrochen, der BPR auf 20 bar gesetzt und R2 bis Erreichen dieses Wertes mit $\dot{m}_{CFC2}$ = 500 g/h $CO_2$ beschickt.

Anschließend wurden unter Rühren bei 700 U/min mit $\dot{m}_{CFC3}$ = 60 g/h 3 Pulse à 25 g (0,43 mol) Propylenoxid in R2 eingeleitet, wobei nach jedem Puls der Druckabfall durch Zudosierung von $CO_2$ ausgeglichen wurde, und vor jeder weiteren Zugabe von Propylenoxid abgewartet wurde, bis kein weiterer Druckabfall zu beobachten war. Nachdem die Reaktion des dritten Propylenoxid-Pulses abgeklungen war (kein weiterer Druckabfall zu beobachten), wurde der Druck in R2 mit $CO_2$ auf 20 bar eingestellt und kontinuierlich unter Rühren bei 700 U/min mit $\dot{m}_{CFC3}$ = 60 g/h insgesamt 100 g (1,72 mol) Propylenoxid zudosiert. Nach Beendigung der Zugabe wurde R1 mit 20,5 bar $CO_2$ beaufschlagt und die Brücke zwischen R1 und R2 geöffnet. Der Massenstrom $\dot{m}_{in,R1}$ ($CO_2$) wurde auf 300 g/h eingestellt.

Die Brücke wurde vor dem Absorber auf 140 °C, Absorber und Überleitung zu R2 auf 120 °C, Gasauslass-Kapillare auf 60 °C und BPR auf 140 °C geheizt. R2 wurde auf 60 °C Innentemperatur abgekühlt. Nach Erreichen der Temperatur wurde über die HPLC-Pumpe mit einer Flussrate von 5 ml/min eine Lösung von 7,22 g (0,011 mol) Dibutylzinndilaurat (DBTL) in 25 ml Dichlormethan in R2 eingeleitet. Dann wurde R1 unter Rühren bei 50 U/min auf 125 °C Innentemperatur geheizt und nach Erreichen der Temperatur über 5 h gasförmiges Formaldehyd in R2 eingeleitet. Anschließend wurde die $CO_2$-Zufuhr unterbrochen, die Brücke abgesperrt und R1 auf 25 °C abgekühlt. In R2 wurde unter Rühren bei 400 U/min mit der HPLC-Pumpe bei einer Flussrate von 10 ml/min eine Lösung von 57,05 g (0,50 mol) Glutarsäureanhydrid in 100 ml Dichlormethan eingeleitet. Nach beendeter Zugabe wurde die Innentemperatur in R2 auf 100 °C angehoben und das Reaktionsgemisch bei dieser Temperatur 18 h bei 400 U/min gerührt. Anschließend wurde der Druck abgelassen und R1 und R2 auf 25 °C gekühlt. Der Gewichtsverlust in R1 betrug 89,16 g. In R2 wurden 655,42 g eines gelbes viskoses Öl mit farblosen festen Partikeln vorgefunden. Dieses wurde mit 100 ml Chloroform verdünnt und über einen Papierfilter filtriert. Nach Entfernen der flüchtigen Komponenten des Filtrates unter vermindertem Druck wurden 463,27 g eines klaren, gelben Öls erhalten.

Per Gel-Permeations-Chromatographie (GPC) gegen Polystyrol-Standards wurde ein zahlenmittleres Molekulargewicht $M_n$ = 2091 g/mol und ein Polydispersitätsindex PDI = 1,35 ermittelt.

Es sei angemerkt, dass bei dem während der Reaktion herrschenden $CO_2$-Partialdruck kein Einbau von $CO_2$ in die Polymerkette stattfand.

Viskosität: 0,52 Pa· s.

Per thermogravimetrischer Analyse (TGA) wurden zwei Zersetzungsstufen ermittelt:

Stufe 1: Zersetzungstemperatur 142,40 °C, relativer Gewichtsverlust 6,80%

Stufe 2: Zersetzungstemperatur 379,64 °C, relativer Gewichtsverlust 80,28%

Zur Ermittlung der 1. Zersetzungsstufe wurde ein horizontales Auswerteverfahren angewendet.

OH-Zahl: 52,6 $mg_{KOH}$/g. Hieraus ergibt sich ein durchschnittliches Molekulargewicht M.W. = 2129 g/mol.

$^1$H-NMR-Spektroskopie (400 MHz, $CDCl_3$): $\delta$ = 0,82-0,99 (m, 2,49 H), 0,99-1,23 (m, 86,73 H, PE-$CH_3$), 1,23-1,39 (m, 7,90 H, PEC-$CH_3$), 1,48 (d, *J* = 6,0 Hz, 2,29 H, cPC-$CH_3$), 1,87-1,99 (m, 3,91 H, Gt-$CH_2$), 2,32-2,47 (m, 8,00 H, Gt-C(O)$CH_2$), 3,17-3,79 (m, 87,29 H, PE-CH/PE-$CH_2$/PEC-$CH_2$), 3,81-3,95 (m, 1,97 H), 4,02 (dd, *J* = 8,2 Hz, 1,01 H, cPC-$CH_2$), 4,57 (dd, *J* = 7,5 Hz, 0,72 H, cPC-$CH_2$), 4,69-4,94 (m, 5,62 H, $OCH_2O$/PEC-CH/cPC-CH), 5,13 (s, 3,09 H, $OCH_2O$), 5,27 (s, 0,11 H, $OCH_2O$), 5,27-5,39 (m, 3,14 H, $OCH_2O$) ppm.

Die durchschnittliche Summenformel beträgt laut $^1$H-NMR-Spektroskopie Gt-O-$PE_{28,91}$-$PEC_{2,63}$-$(CH_2O)_{4,29}$-Gt. Die Carbonat-Einheiten resultieren aus der Aktivierung des DMC Katalysators. Das Produkt enthält durchschnittlich 4,29 Oxymethylengruppen pro Molekül.

Das durchschnittliche Molekulargewicht beträgt laut $^1$H-NMR-Spektroskopie 2323 g/mol.

$^{13}$C-APT-NMR-Spektroskopie (100 MHz, $CDCl_3$): $\delta$ = 13,0 (-), 13,6 (-), 16,2 (-), 16,6 (-), 16,7 (-), 16,8 (-), 17,1 (-), 17,5 (-), 17,6 (-), 17,9 (-), 18,1 (-), 18,8 (-), 19,2 (+), 19,3 (+), 19,4 (+), 19,5 (+), 19,6 (+), 22,1 (+), 24,3 (+), 24,5 (+), 25,7 (+), 26,1 (+), 28,6 (+), 28,8 (+), 29,0 (+), 29,1 (+), 31,3 (+), 32,1 (+), 32,3 (+), 32,6 (+), 32,8 (+), 32,9 (+), 33,3 (+), 65,1 (-), 66,6 (-), 66,7 (-), 70,1 (+), 72,4 (+), 72,6 (+), 72,7 (+), 72,9 (-), 73,2 (-), 73,3 (-), 73,9 (-), 73,9 (-), 74,4 (-), 74,5 (-), 74,6 (-), 74,8 (-), 74,8 (-), 74,9 (-), 76,0 (-), 76,0 (-), 84,3 (+, O-$CH_2$-O), 84,9 (+, O-$CH_2$-O), 87,8 (+, O-$CH_2$-O), 88,5 (+, O-$CH_2$-O), 88,8 (+, O-$CH_2$-O), 89,3 (+, O-$CH_2$-O), 89,6 (+, O-$CH_2$-O), 90,0 (+, O-$CH_2$-O), 90,1 (+, O-$CH_2$-O), 91,7 (+, O-$CH_2$-O), 92,9 (+, O-$CH_2$-O), 153,7 (+, C=O, PEC), 153,8 (+, C=O, PEC), 154,2 (+, C=O, PEC), 154,3 (+, C=O, PEC), 171,6 (+), 171,7 (+), 171,8 (+), 175,0 (+), 175,2 (+) ppm.

Sowohl im $^1$H- als auch im $^{13}$C-NMR-Spektrum wurden Signale für Polyethercarbonat-Gruppen (PEC) und Oxymethylen-Gruppen ($OCH_2O$) beobachtet. Das Auftreten einer Vielzahl an Signalen im $^1$H-NMR-Spektrum im Bereich 4,4 bis 5,2 ppm, sowie einer Vielzahl an Signalen mit positiver Polarität im $^{13}$C-APT-NMR-Spektrum im Bereich 84,3 bis 92,9 ppm zeigt das Vorliegen chemisch nicht-äquivalenter Oxymethylen-Gruppen in Blöcken $(CH_2O)_n$ mit unterschiedlicher Kettenlängen. Das Auftreten von Carbonat-Signalen im $^{13}$C-APT-NMR-Spektrum bei 153 bis 155 ppm zeigt

das Vorliegen von Polyethercarbonat-Einheiten.

IR-Spektroskopie: ν = 2971 (vw,), 2930 (w), 2896 (w), 2869 (w), 1811 (w, ν[C=O; cPC]), 1737 (m, ν[C=O]; PEC), 1617 (vw), 1453 (w), 1373 (w), 1345 (vw), 1296 (vw), 1262 (w), 1094 (s), 1012 (w), 968 (w), 928 (vw), 865 (vw), 776 (vw), 734 (vw), 524 (vw) $cm^{-1}$.

Das IR-Spektrum ist weder identisch mit dem IR-Spektrum von Paraformaldehyd, noch mit dem IR-Spektrum von PET-1. Die Bande bei 1737 $cm^{-1}$ zeigt die Anwesenheit von Polyethercarbonat-Blöcken. Das Auftreten einer Bande bei 968 $cm^{-1}$ weist auf das Vorliegen von Oxymethylen-Gruppen hin.

Sowohl die NMR- als auch die IR-spektroskopischen Daten belegen zweifelsfrei die Zusammensetzung des Produktes aus Polyether-Polyethercarbonat-Oxymethylen-Blöcken.

Beispiel 1-1: Herstellung des erfindungsgemäßen Polyurethanpolymerschaums PU1-1 mit einem Oxymethylenpolyol gemäß einer ersten Vorschrift

Zur Herstellung eines Weichschaums wurden in einer Metalldose 9.95 g (0.0142 eq) des Polyols B, 0.06 g ($1.48 \cdot 10^{-4}$ eq), Zinn(II)octanoat, 0.33 g (0.037 eq) Wasser und 0.22 g des Schaumadditivs B8239 miteinander vermischt. Diese Mischung wurde bei 1400 U/min für 30 Sekunden gerührt. Anschließend fügte man 6.91 g (0.079 eq) 2,4-Toluylendiisocyanat (2,4-TDI) hinzu und rührte weiter. Die Schaumbildung setzte unmittelbar ein und erreichte nach 5 Minuten die maximale Höhe.

Beispiel 1-2: Herstellung des erfindungsgemäßen Polyurethanpolymerschaums PU1-2 mit einem Oxymethylenpolyol gemäß einer zweiten Vorschrift

Zur Herstellung eines Weichschaums wurden in einer Metalldose 10.08 g (0.0143 eq) des Polyols B, 0.12 g ($2.96 \cdot 10^{-4}$ eq), Zinn(II)octanoat, 0.2 g (0.022 eq) Wasser und 0.25 g des Schaumadditivs B8239 miteinander vermischt. Diese Mischung wurde per Hand für 30 Sekunden gerührt. Anschließend fügte man 6.09 g (0.07 eq) 2,4-Toluylendiisocyanat (2,4-TDI) hinzu und rührte per Hand weiter. Die Schaumbildung setzte unmittelbar ein und erreichte nach 5 Minuten die maximale Höhe.

Vergleichsbeispiel 1-3: Herstellung des Polyurethanpolymerschaums PU1-3 mit einem Polyetherpolyol

Zur Herstellung eines Weichschaums wurden in einer Metalldose 10,02 g (0.0086 eq) des Polyols PET-3 (Arcol 1108), 0.105 g ($2.6 \cdot 10^{-4}$ eq) Zinn(II)octanoat, 0.26 g (0.029 eq) Wasser und 0.25 g des Schaumadditivs B8239 miteinander vermischt. Diese Mischung wurde bei 1400 U/min für 30 Sekunden gerührt. Anschließend fügte man 3,296 g (0.038 eq) 2,4-Toluylendiisocyanat (2,4-TDI) hinzu und rührte weiter. Die Schaumbildung setzte unmittelbar ein und erreichte nach 5 Minuten die maximale Höhe.

Beispiel 2-1: Polyolabbau (Trifluormethansulfonsäure 0.17 M in Dichloromethan, 35 °C)

In einem Zweihalskolben wurden 3 ml des Polyols B in 3 ml Dichlormethan gelöst. Eine Lösung von 0.17 mol/l Trifluormethansulfonsäure in Dichlormethan wurde bereitgestellt und 5.2 ml dieser Lösung (0.884 mmol Trifluormethansulfonsäure) hinzugefügt. Die Temperatur der Reaktionsmischung wurde über den Verlauf von 5.5 Stunden auf 35 °C erhöht (durch Heizen) und die Mischung bei 35 °C für weitere 30 Minuten nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

$^1$H-NMR-Spektroskopie (400 MHz, $CDCl_3$): δ = 1,0928 (m, 3 H, PO-$CH_3$ /PET-1110-$CH_3$), 1,195-1,303 (m, 0,063 H, PO-$CH_3$ /PET-1110-$CH_3$), 3,126 (m, 0,044 H, PO-CH/PO-$CH_2$/PET-1110-$CH_2$/ PET-1110-CH), 3,234-3,772(m, 3,28 H, PO-CH/PO-$CH_2$/PET-1110-$CH_2$/PET-1110-CH), 3,78-3,98(m, 0,25 H, PO-CH/PO-$CH_2$/PET-1110-$CH_2$/PET1110-CH), 4,56-4,90 (m, 0,404 H, $OCH_2O$), 5,11 (m, 0,015 H, $OCH_2O$) ppm.

Aus dem $^1$H-NMR-Spektrum ergibt sich eine Reduktion des Oxymethylengruppengehaltes um 42% gegenüber dem als Edukt eingesetzten Polyol A.

$^{13}$C-CPD-NMR-Spektroskopie (100 MHz, $CDCl_3$): δ = 16,51; 16,85; 17,26; 17,38; 17,58; 18,02; 18,145; 18,48; 53,42; 55,16; 65,52; 67,10; 71,43; 71,68; 72,19; 72,79; 73,06; 73,31; 74,24; 74,34; 74,67; 74,84; 75,34; 75,34; 75,81; 76,81 ($CDCl_3$); 77,08 ($CDCl_3$); 77,4 ($CDCl_3$); 78,46; 91,16 (O-$CH_2$-O); 92,64 (O-$CH_2$-O); 93,55 (O-$CH_2$-O); 94,38 (O-$CH_2$-O); 96,59 (O-$CH_2$-O) ppm.

IR-Spektroskopie: ν = 3388,67 (br, OH); 2972,34; 2931,27; 2074,55; 1622,82; 1445,81; 1375,01; 1338,19;

1250,39; 1093,21; 1040,81; 988,42; 900,62; 802,91; 736,36; 688,21; 505,54 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Beispiel 2-2: Polyolabbau (Trifluormethansulfonsäure 0.17 M in Acetonitril, 40 °C)

In einem Zweihalskolben wurden 3 ml des Polyols B in 3 ml Acetonitril gelöst. Eine Lösung von 0.17 mol/l Trifluormethansulfonsäure in Dichlormethan wurde bereitgestellt und 4 ml dieser Lösung (0.68 mmol Trifluormethansulfonsäure) hinzugefügt. Die Temperatur wurde über den Verlauf von 5.5 Stunden auf 40 °C erhöht und die Mischung bei 40 °C für weitere 60 Minuten nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

> $^1$H-NMR-Spektroskopie (400 MHz, $CDCl_3$): $\delta$ = 1,139 (m, 3 H, PO-$CH_3$ /PET-1110-$CH_3$), 1,28 (m, 0,099 H, PO-$CH_3$ /PET-1110-$CH_3$), 3,199 (m, 0,075 H, PO-CH/PO-$CH_2$/PET-1110-$CH_2$/ PET-1110-CH), 3,243-3,797(m, 3,34 H, PO-CH/PO-$CH_2$/PET-1110-$CH_2$/ PET-1110-CH), 3,81-3,998(m, 0,21 H, PO-CH/PO-$CH_2$/PET-1110-$CH_2$/ PET-1110-CH), 4,596-5,00 (m, 0,373 H, $OCH_2O$) ppm.

Aus dem $^1$H-NMR-Spektrum ergibt sich eine Reduktion des Oxymethylengruppengehaltes um 47% gegenüber dem als Edukt eingesetzten Polyol A.

$^{13}$C-SN-NMR-Spektroskopie (100 MHz, $CDCl_3$): $\delta$ = 16,39; 16,85; 17,17; 17,28; 17,43; 17,89; 17,99; 18,05; 18,22; 18,40; 18,51; 54,92; 54,96; 65,41; 65,89; 66,1; 66,72; 66,92; 71,31; 72,75; 72,95; 73,19; 74,11; 74,35; 74,66; 74,76; 74,99; 75,20; 75,35; 75,74; 76,38; 76,98 ($CDCl_3$); 77,29 ($CDCl_3$); 77,59 ($CDCl_3$); 78,39; 90,02 (O-$CH_2$-O); 90,58 (O-$CH_2$-O); 90,98 (O-$CH_2$-O); 91,65 (O-$CH_2$-O); 92,48 (O-$CH_2$-O); 93,35 (O-$CH_2$-O); 94,17 (O-$CH_2$-O); 94,57 (O-$CH_2$-O); 95,19 (O-$CH_2$-O); 95,56 (O-$CH_2$-O); 96,41 (O-$CH_2$-O) ppm.

IR-Spektroskopie: $\nu$ = 3463,72 (br, OH); 2969,51; 2870,38; 1726,19; 1452,89; 1373,59; 1343,85; 1297,12; 1093,21; 1039,40; 989,84; 924,70; 863,81; 734,94; 505,54 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Beispiel 2-3: Polyolabbau (Trifluormethansulfonsäure 0.3 M in Wasser, 45 °C)

In einem Zweihalskolben wurden 3 ml des Polyols B in 3 ml Wasser dispergiert. Eine Lösung von 0.3 mol/l Trifluormethansulfonsäure in Wasser wurde bereitgestellt und 5 ml dieser Lösung (1.5 mmol Trifluormethansulfonsäure) hinzugefügt. Die Temperatur wurde über den Verlauf von 3 Stunden auf 45 °C erhöht und die Mischung bei 45 °C für weitere 3 Stunden nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

> $^1$H-NMR-Spektroskopie (400 MHz, $CDCl_3$): $\delta$ = 1,144 (m, 3 H, PO-$CH_3$ /PET-1110-$CH_3$), 1,23-1,32 (m, 0,079 H, PO-$CH_3$ /PET-1110-$CH_3$), 3,183 (m, 0,082 H, PO-CH/PO-$CH_2$/PET-1110-$CH_2$/ PET-1110-CH), 3,253-3,8 (m, 3,46 H, PO-CH/PO-$CH_2$/PET-1110-$CH_2$/ PET-1110-CH), 3,82-4,00(m, 0,21 H, PO-CH/PO-$CH_2$/PET-1110-$CH_2$/ PET-1110-CH), 4,58-4,94 (m, 0,373 H, $OCH_2O$) ppm.

Aus dem $^1$H-NMR-Spektrum ergibt sich eine Reduktion des Oxymethylengruppengehaltes um 72% gegenüber dem als Edukt eingesetzten Polyol A.

$^{13}$C-APT-NMR-Spektroskopie (100 MHz, $CDCl_3$): $\delta$ = 16,70 (+); 16,82(+); 17,07(+); 17,14(+); 17,25(+); 17,7(+); 17,75(+); 17,88(+); 17,96(+); 18,03 (+); 18,24(+); 18,37(+); 18,52(+); 18,52 (+); 53,41 (-); 54,92 (+); 65,45(+); 65,87 (-); 66,18(+); 66,71 (-); 66,88 (+); 66,93(+); 71,3 (-); 71,60 (-); 71,69(+); 72,72 (+); 72,97 (-); 73,10 (-); 73,17 (-); 73,72 (-); 73,85(+); 74,08 (-); 74,31 (-); 74,36 (-); 74,56 (+); 74,73 (+); 74,95 (+); 75,04(+); 75,13(+); 75,32(+); 75,67 (-); 76,29 (+); 76,39 (+); 77,01 (-, $CDCl_3$); 77,28 (-, $CDC1_3$); 77,59 (-, $CDC1_3$); 78,33(+); 90,97 (-, O-$CH_2$-O); 92,14(-, O-$CH_2$-O); 92,24 (-, O-$CH_2$-O); 93,35 (-, O-$CH_2$-O); 94,154 (-, O-$CH_2$-O); 94,25 (-, O-$CH_2$-O); 94,39 (-, O-$CH_2$-O); 95,16 (-, O-$CH_2$-O); 95,19 (-, O-$CH_2$-O); 95,49 (-, O-$CH_2$-O); 95,56(-, O-$CH_2$-O); 95,81 (-, O-$CH_2$-O); 96,41 (-, O-$CH_2$-O) ppm.

Beispiel 2-4: Polyolabbau (Trifluormethansulfonsäure 0,3 M in Acetonitril, 45 °C)

In einem Zweihalskolben wurden 3 ml des Polyols A in 3 ml Acetonitril gelöst. Eine Lösung von 0.3 mol/l Trifluormethansulfonsäure in Wasser wurde bereitgestellt und 4 ml dieser Lösung (1.2 mmol Trifluormethansulfonsäure) hinzugefügt. Die Temperatur wurde über den Verlauf von 4 Stunden auf 45 °C erhöht und die Mischung bei 45 °C für weitere 2.5 Stunden nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

$^1$H-NMR-Spektroskopie (400 MHz, $CDCl_3$): $\delta$ = 1,139 (m, 3 H, PO-$CH_3$ /PET-1110-$CH_3$), 3,18 (m, 0,098 H, PO-CH/PO-$CH_2$/PET-1110-$CH_2$/ PET-1110-CH), 3,26-3,823 (m, 3,378 H, PO-CH/PO-$CH_2$/PET-1110-$CH_2$/ PET-1110-CH), 3,84-4,00(m, 0,151 H, PO-CH/PO-$CH_2$/PET-1110-$CH_2$/ PET-1110-CH), 4,59-4,914 (m, 0,14 H, $OCH_2O$) ppm.

Aus dem $^1$H-NMR-Spektrum ergibt sich eine Reduktion des Oxymethylengruppengehaltes um 41% gegenüber dem als Edukt eingesetzten Polyol B.

$^{13}$C-dept45-NMR-Spektroskopie (100 MHz, $CDCl_3$): $\delta$ = 16,76-17,41; 17,81; 18,10; 18,27; 18,56; 54,96; 54,99; 65,41; 65,90; 66,15; 66,75; 66,97; 67,00; 71,37; 71,65; 72,77; 72,96; 73,23-73,86; 74,16; 74,36; 74,44; 74, 60; 74,77; 74,98; 75,20; 75,34; 75,75; 76,49; 76,57 ($CDCl_3$); 77,09 ($CDCl_3$); 78,40; 89,16 (O-$CH_2$-O); 90,07 (O-$CH_2$-O); 94,20 (O-$CH_2$-O); 95,19 (O-$CH_2$-O); 95,58 (O-$CH_2$-O); 95,85 (O-$CH_2$-O); 96,44 (O-$CH_2$-O) ppm.

IR-Spektroskopie: $\nu$ = 3460,81 (br, OH); 2969,51; 2868,97; 1452,89; 1373,59; 1343,85; 1297,12; 1088,96; 923,28; 863,81; 444,65 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Beispiel 2-5: Polyolabbau (Trifluormethansulfonsäure 0,3 M in Wasser, 45 °C)

In einem Zweihalskolben wurden 3 ml des Polyols B in 3 ml Wasser dispergiert. Eine Lösung von 0.3 mol/l Trifluormethansulfonsäure in Wasser wurde bereitgestellt und 4 ml dieser Lösung (1.2 mmol Trifluormethansulfonsäure) hinzugefügt. Die Temperatur wurde über den Verlauf von 3 Stunden auf 45 °C erhöht und die Mischung bei 45 °C für weitere 1.5 Stunden nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

$^1$H-NMR-Spektroskopie (400 MHz, $CDCl_3$): $\delta$ = 1,03-1,269 (m, 3 H, PO-$CH_3$ /PET-1110-$CH_3$), 3,17 (m, 0,09 H, PO-CH/PO-$CH_2$/PET-1110-$CH_2$/PET-1110-CH), 3,27-3,81 (m, 3,401 H, PO-CH/PO-$CH_2$/PET-1110-$CH_2$/ PET-1110-CH), 3,82-3,995(m, 0,152 H, PO-CH/PO-$CH_2$/PET-1110-$CH_2$/ PET-1110-CH), 4,57-4,93 (m, 0,17 H, $OCH_2O$) ppm.

Aus dem $^1$H-NMR-Spektrum ergibt sich eine Reduktion des Oxymethylengruppengehaltes um 29% gegenüber dem als Edukt eingesetzten Polyol B.

$^{13}$C-dept45-NMR-Spektroskopie (100 MHz, $CDCl_3$): $\delta$ = 16,72; 16,88; 17,17; 17,25; 17,35; 17,53; 17,98; 18,12; 18,20; 18,49; 53,41; 55,04; 65,43; 65,95; 66,28; 66,81; 67,07; 71,36; 71, 35; 71,69; 72,02; 72,77; 72,97; 73,23; 73,43; 73,69; 74,15; 74,32; 74,78; 74,98; 75,04; 75,23; 75,37; 76,51; 76,87 78,38; 92,21 (O-$CH_2$-O); 94,23 (O-$CH_2$-O); 94,33 (O-$CH_2$-O); 95,23 (O-$CH_2$-O); 95,51 (O-$CH_2$-O); 95,61 (O-$CH_2$-O); 95,92 (O-$CH_2$-O); 96,48 (O-$CH_2$-O) ppm.

IR-Spektroskopie: $\nu$ = 3472,21 (br, OH); 2970,92; 2929,86; 2870,38; 1714,87; 1452,89; 1373,59; 1343,85; 1297,12; 1271,63; 1090,38; 1036,57; 923,28; 865,22; 733,53; 700,96; 638,65 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Vergleichsbeispiel 2-6: Polyolabbau

In einem Zweihalskolben wurden 4 ml PET-3 in 4 ml einer Lösung von 0.25 mol/l Trifluormethansulfonsäure in Wasser dispergiert. Die Temperatur wurde über den Verlauf von 1 Stunden auf 45 °C erhöht und die Mischung bei 45 °C für weitere 3 Stunden nachgerührt.

Die Reaktionsmischung wurde mit wässriger Natronlauge gewaschen und 3-mal mit Dichlormethan extrahiert. Nach Trocknen über Magnesiumsulfat wurde das Lösungsmittel am Rotationsverdampfer entfernt. Das erhaltene Produkt wurde spektroskopisch analysiert:

$^1H$-NMR-Spektroskopie (400 MHz, $CDCl_3$): $\delta$ = 0,79-1,285 (m, 1 H, PO-$CH_3$ /PET-1110-$CH_3$), 2,85-4,03 (m, 1,266 H, PO-CH/PO-$CH_2$/PET-1110-$CH_2$/PET-1110-CH) ppm.

$^{13}C$-dept45-NMR-Spektroskopie (100 MHz, $CDCl_3$): $\delta$ = 16,81; 17,05; 17,21; 17,32; 17,98; 18,2; 18,40; 18,55; 53,44; 65,94; 66,92; 68,47; 70,45; 70,63; 71,06; 72,78; 73,44; 74,85; 75,12; 775,30; 75,39; 75,48; 75,93; 76,92 ($CDCl_3$); 77,37 ($CDCl_3$); 77,64 ($CDCl_3$) ppm.

Ein Vergleich der NMR Spektren von PET-3 und des nach Polyolabbau erhaltenen Produktes zeigte keine Unterschiede.

IR-Spektroskopie: $\nu$ = 3472,21 (br, OH); 2970,92; 2929,86; 2870,38; 1714,87; 1452,89; 1373,59; 1343,85; 1297,12; 1271,63; 1090,38; 1036,57; 865,22; 733,53; 700,96; 638,65 $cm^{-1}$

Das charakteristische Signal im IR-Spektrum bei 3300-3500 $cm^{-1}$ belegt eindeutig die Anwesenheit von Hydroxylgruppen im erhaltenen Polyol.

*vergleich*

Die nachfolgende Tabelle zeigt einen Vergleich der Resultate aus den Beispielen 2-1 bis 2-5 und dem Vergleichsbeispiel 2-6.

| Beispiel | Eingesetzte Säure | Lösungs mittel | Konzentration [M] | Temperatur [°C] | Abnahme des FA Anteils im Produkt [%] |
|---|---|---|---|---|---|
| 2-1 | $CF_3SO_3H$ | $CH_2Cl_2$ | 0,17 | 35 | 42 |
| 2-2 | $CF_3SO_3H$ | $CH_3CN$ | 0,17 | 40 | 47 |
| 2-3 | $CF_3SO_3H$ | $H_2O$ | 0,3 | 45 | 72 |
| 2-4 | $CF_3SO_3H$ | $CH_3CN$ | 0,3 | 45 | 41 |
| 2-5 | $CF_3SO_3H$ | $H_2O$ | 0,3 | 45 | 29 |
| 2-6 (Vgl.) | $CF_3SO_3H$ | $H_2O$ | 0,25 | 45 | kein Abbau |

Ein Vergleich der Beispiele 2-1 bis 2-5 mit dem Vergleichsbeispiel 2-6 belegt, dass die gemäß der vorliegenden Erfindung hergestellten Polyole in sauren Medien bereits unter milden Bedingungen bei Temperaturen $\leq$90°C (Beispiele 2-1 bis 2-5) abbaubar sind, während vergleichbare Polyole, die keine Oxymethylengruppen enthalten, unter gleichen Bedingungen nicht abgebaut werden (Vergleichsbeispiel 2-6).

Beispiel 3-1: PUR-Schaumabbau (Trifluormethansulfonsäure 0,2 M in Wasser, 70 °C)

Eine Lösung von Trifluormethansulfonsäure in Wasser (0,2 mol/l) wurde frisch hergestellt. In einem Rundkolben wurden 0,75 g des Schaums aus Beispiel 1 in 25 ml dieser wässrigen Trifluormethansulfonsäure suspendiert und bei 70 °C für 4,5 Stunden gerührt. Die Farbe des Schaums änderte sich von leicht gelb zu rot-orange. Nach dem Abkühlen wurden 10 ml Dichlormethan hinzugefügt, wobei sich die organische Phase sofort orange färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 50%.

Der nach der Behandlung erhaltene Schaum hatte ein gelartig-transparentes Erscheinungsbild mit oranger Farbe und wurde mittels Thermogravimetrie und IR-Spektroskopie untersucht.

*Analysendaten des nach der Behandlung erhaltenen Schaumes:*

IR-Spektroskopie: $\nu$ = 3309,37; 2966,68; 2921,36; 2867,55; 1696,04; 1655,39; 1597,33; 1527,94; 1492,54; 1448,64; 1408,99; 1373,59; 1277,3; 1220,66; 1077,63; 1028,07; 996,92; 926,11; 860,97; 808,58; 754,71; 696,79; 635,82 $cm^{-1}$.

Zersetzungstemperaturen:

1. Stufe: 104.32°C (-7,08%)
2. Stufe: 323.68°C (-47,94%)
3. Stufe: 390.44°C (-5,65%)

Das in der organischen Phase enthaltene Produkt (organischer Rückstand) wurde mittels NMR-Spektroskopie, IR-Spektroskopie und Thermogravimetrie untersucht.

*Analysendaten des organischen Rückstandes:*

$^{1}$H-NMR-Spektroskopie (400 MHz, $CDCl_3$): $\delta$ = 0,789 (m, 1H, PO-$CH_3$), 1,055 (m, 12,465 H, PO-$CH_3$), 1,184 (m, 1,557 H, PO-$CH_3$), 3,092 (m, 0,22 H, PO-CH/PO-$CH_2$), 3,182-3,74 (m, 13,12 H, PO-CH/PO-$CH_2$), 3,77-4,12 (m, 1,134 H, PO-CH/PO-$CH_2$), 4,51-5,107 (m, 0,98 H, $OCH_2O$) ppm.
Aus dem $^{1}$H-NMR-Spektrum ergibt sich ein molares Verhältnis von Oxymethylengruppen zu Ethergruppen von 0,49.
$^{13}$C-APT-NMR-Spektroskopie (100 MHz, $CDCl_3$): $\delta$ = 17,206 (-); 17,163 (-); 18,47(-); 29,689 (+); 65,58 (-); 71,46 (+); 72,79 (+); 73,34 (+); 74,3 (+); 74,9 (-); 75,12 (-); 75,7 (-); 76,0 (+); 76,72 (+) ($CDCl_3$), 77,04 (+) ($CDCl_3$), 77,36 (+) ($CDCl_3$), 78,51 (-) ppm.
IR-Spektroskopie: $\nu$ = 3337,69 (br, OH); 2970,92; 2925,62; 2870,38; 2166,59; 1724,78; 100,16; 1535,02; 1451,48; 1411,83; 1375,01; 1263,14; 1224,90; 1086,13; 1029,49; 927,53; 866,64; 807,16; 733,53; 702,37; 638,65; 573,51 $cm^{-1}$.
Das charakteristische Signal im IR-Spektrum bei 3300-3500 $cm^{-1}$ belegt eindeutig die Anwesenheit von Hydroxylgruppen im erhaltenen Polyol.
Zersetzungstemperaturen:

1. Stufe: 148,70 °C (-3,64%)
2. Stufe: 260,63 °C (-43,23%)
3. Stufe: 397,17 °C (-20,06%)

Beispiel 3-2: PUR-Schaumabbau (Trifluormethansulfonsäure 0.5M in Wasser, 70 °C)

Eine Lösung von Trifluormethansulfonsäure in Wasser (0,5 mol/l) wurde frisch hergestellt. In einem Rundkolben wurden 0,55 g des Schaums aus Beispiel 1 in 25 ml dieser wässrigen Trifluormethansulfonsäure suspendiert und bei 70 °C für 4 Stunden gerührt. Die Farbe des Schaums änderte sich von leicht gelb zu dunkelorange. Man beobachtete die Bildung von einigen Tröpfchen einer organischen Phase. Nach dem Abkühlen wurden 10 ml Dichlormethan hinzugefügt, wobei sich die organische Phase sofort orange färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.
Das Gewicht des Schaums wurde bestimmt und mit dem Gewicht des ursprünglichen Schaums verglichen. In diesem Beispiel betrug der Gewichtsverlust 46%.
Der nach der Behandlung erhaltene Schaum hatte ein gelartig-transparentes Erscheinungsbild mit orangener Farbe und wurde mittels Thermogravimetrie und IR-Spektroskopie untersucht.

*Analysendaten des nach der Behandlung erhaltenen Schaumes:*

IR-Spektroskopie: $\nu$ = 3329,19; 2970,92; 2922,78; 2866,13; 1676,63; 1598,75; 1529,36; 1448,64; 1408,99; 1373,59; 1341,02; 1275,88; 1222,07; 1156,93; 1064,89; 1028,07; 924,7; 880,8; 812,83; 749,10; 635,82 $cm^{-1}$.
Zersetzungstemperaturen:

1. Stufe: 152.80°C (-1.17%)
2. Stufe: 281.88 °C (-42.09%)
3. Stufe: 390.82 °C (-17.35%)

Das in der organischen Phase enthaltene Produkt (organischer Rückstand) wurde mittels NMR-Spektroskopie, IR-Spektroskopie und Thermogravimetrie untersucht.

*Analysendaten des organischen Rückstandes:*

$^1H$-NMR-Spektroskopie (400 MHz, $CDCl_3$): δ = 0,823 - 1,065 - 1,20 (m, 1,057 H, PO-$CH_3$), 3,097 (m, 0,04 H, PO-CH/PO-$CH_2$), 3,168-3,78 (m, 1,042 H, PO-CH/PO-$CH_2$), 3,782-4,4 (m, 0,185 H, PO-CH/PO-$CH_2$), 4,658-5,123 (m, 0,015 H, $OCH_2O$) ppm.

Aus dem $^1H$-NMR-Spektrum ergibt sich ein molares Verhältnis von Oxymethylengruppen zu Ethergruppen von 0,02.

$^{13}C$-APT-NMR-Spektroskopie (100 MHz, $CDCl_3$): δ = 17,067(-); 18,134(-); 18,496(-); 65,632(-); 66,08(+); 67,22(-); 67,74(+); 71,399 (+); 72,71 (+); 72,96 (+); 73,2 (+); 73,83 (+); 74,12 (+); 74,30 (+); 74,66(-); 74,87(-); 75,12(-);75,30(-); 75,52(-); 75,73(-); 76,74(+) ($CDCl_3$), 77,04(+) ($CDCl_3$), 77,36(+) ($CDCl_3$), 78,4 (-) ppm.

IR-Spektroskopie: ν = 3346,18 (br, OH); 2970,92; 2870,38; 1723,36; 1600,16; 1536,44; 1451,48; 1410,41; 1373,59; 1342,44; 1281,55; 1224,90; 1080,46; 1029,49; 927,53; 865,22; 817,07; 757,60; 733,53; 638,65; 573,51 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Zersetzungstemperaturen:

1. Stufe: 320.97 °C (-67.27%)
2. Stufe: 409.26 °C (-9.5%)

<u>Beispiel 3-3: PUR-Schaumabbau (Trifluormethansulfonsäure 1M in Wasser, 70 °C)</u>

Eine Lösung von Trifluormethansulfonsäure in Wasser (1 mol/l) wurde frisch hergestellt. In einem Rundkolben wurden 0,55 g des Schaums aus Beispiel 1 in 25 ml dieser wässrigen Trifluormethansulfonsäure suspendiert und bei 70 °C für 4 Stunden gerührt. Anschließend ließ man auf Raumtemperatur abkühlen. Die Farbe des Schaums änderte sich von leicht gelb zu dunkelrot. Es wurden 10 ml Dichlormethan hinzugefügt, wobei sich die organische Phase sofort orange färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 21%.

Der nach der Behandlung erhaltene Schaum hatte ein gelartig-transparentes Erscheinungsbild mit orangener Farbe und wurde mittels Thermogravimetrie und IR-Spektroskopie untersucht.

*Analysendaten des nach der Behandlung erhaltenen Schaumes:*

IR-Spektroskopie: ν = 3458,05; 3330,61; 2976,5; 2928,44; 2870,38; 1674,38; 1591,67; 1530,78; 1450,06; 1410,41; 1376,42; 1222,07; 1158,35; 1070,55; 1026,65; 927,53; 821,32; 757,60; 635,82; 572,09 $cm^{-1}$.

Die charakteristischen Signale im IR-Spektrum bei 3300-3500 $cm^{-1}$ belegen eindeutig die Anwesenheit von Hydroxylgruppen im erhaltenen Polyol.

Zersetzungstemperaturen:

1. Stufe: 104.49 °C (-5.15%)
2. Stufe: 271.41 °C (-32.61%)
3. Stufe: 404.22 °C (-18.14%)

Das in der organischen Phase enthaltene Produkt (organischer Rückstand) wurde mittels NMR-Spektroskopie, IR-Spektroskopie und Thermogravimetrie untersucht.

*Analysendaten des organischen Rückstandes:*

$^1H$-NMR-Spektroskopie (400 MHz, $CDCl_3$): δ = 0,931 (m, 0,0379 H, PO-$CH_3$), 1,119 (m, 0,997 H, PO-$CH_3$), 1,25 (m, 0,028 H, PO-$CH_3$), 2,08 (s, 0,061 H); 3,15 (m, 0,051 H, PO-CH/PO-$CH_2$), 3,22-3,852 (m, 1,1038 H, PO-CH/PO-$CH_2$), 3,854-4,068 (m, 0,074 H, PO-CH/PO-$CH_2$), 4,51-5,206 (m, 0,0123 H, $OCH_2O$) ppm.

Aus dem $^1H$-NMR-Spektrum ergibt sich ein molares Verhältnis von Oxymethylengruppen zu Ethergruppen von 0,02.

$^{13}C$-APT-NMR-Spektroskopie (100 MHz, $CDCl_3$): δ = 16,868 (-); 17,119 (-); 65,76 (-); 71,16 (+); 72,91 (+); 73,87 (+); 74,90 (-); 76,74(+) ($CDCl_3$), 77,02 (+) ($CDCl_3$), 77,34 (+) ($CDCl_3$), 83,72 (+); 84,28 (+) ppm.

IR-Spektroskopie: ν = 3439,64 (br, OH); 2970,92; 2970,03; 2871,80; 1723,36; 1649,73; 1454,31; 1373,59; 1343,85; 1282,96; 1257,47; 1226,32; 1080,46; 1030,90; 1013,91; 927,53; 863,81; 638,65; 573,51 $cm^{-1}$.
Das charakteristische Signal im IR-Spektrum bei 3300-3500 $cm^{-1}$ belegt eindeutig die Anwesenheit von Hydroxylgruppen im erhaltenen Polyol.
Zersetzungstemperaturen:

1. Stufe: 356.83 °C (-73.79%)
2. Stufe: 514.39 °C (-3.94%)

Beispiel 3-4: PUR-Schaumabbau (Essigsäure 0.5M in Wasser, 70 °C)

Eine Lösung von Essigsäure in Wasser (0,5 mol/l) wurde frisch hergestellt. In einem Rundkolben wurden 0,503 g des Schaums aus Beispiel 2 in 10 ml dieser wässrigen Essigsäure suspendiert und bei 70 °C für 4 Stunden gerührt. Anschließend ließ man auf Raumtemperatur abkühlen. Die Farbe des Schaums änderte sich nicht während der Reaktion. Es wurden 15 ml Dichlormethan hinzugefügt, wobei die organische Phase farblos blieb. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.
Das Gewicht des Schaums wurde bestimmt und mit dem Gewicht des ursprünglichen Schaums verglichen. In diesem Beispiel betrug der Gewichtsverlust 5%.
Der nach der Behandlung erhaltene Schaum war ein harter Block mit gelblicher Farbe und wurde mittels Thermogravimetrie und IR-Spektroskopie untersucht.

*Analysendaten des nach der Behandlung erhaltenen Schaumes:*

IR-Spektroskopie: ν = 3496,29; 3282,46; 2970,92; 2929,86; 2871,80; 1712,03; 1641,23; 1598,75; 1533,61; 1448,64; 1410,41; 1373,59; 1277,30; 1222,07; 1081,88; 1029,49; 996,92; 924,70; 876,55; 811,41; 733,53 $cm^{-1}$.
Zersetzungstemperaturen:

1. Stufe: 239.61 °C (-16.04 %)
2. Stufe: 373.56 °C (-45.32%)

Das in der organischen Phase enthaltene Produkt (organischer Rückstand) wurde mittels NMR-Spektroskopie untersucht.

*Analysendaten des organischen Rückstandes:*

$^1$H-NMR-Spektroskopie (400 MHz, $CDCl_3$): δ = 0,689-0,93 (m, 1 H, PO-$CH_3$), 1,088 (m, 3,963 H, PO-$CH_3$), 1,22 (m, 1,814 H, PO-$CH_3$), 3,31 (m, 1,27 H, PO-CH/PO-$CH_2$), 3,36-3,72 (m, 2,882 H, PO-CH/PO-$CH_2$), 3,73-3,895 (m, 0,435 H, PO-CH/PO-$CH_2$), 4,51-5,131 (m, 0,824 H, $OCH_2O$) ppm.
Aus dem $^1$H-NMR-Spektrum ergibt sich ein molares Verhältnis von Oxymethylengruppen zu Ethergruppen von 0,18.
$^{13}$C-APT-NMR-Spektroskopie (100 MHz, $CDCl_3$): δ = 19,76 (-); 52,47 (+);76,74(+) ($CDCl_3$), 77,02 (+) ($CDCl_3$), 77,34 (+) ($CDCl_3$), 176,43 (+) ppm.
Es sei angemerkt, dass die NMR-Spektren mit einer stark verdünnten Probe aufgenommen wurden.

Beispiel 3-5: PUR-Schaumabbau (Essigsäure 1M in Wasser, 70 °C)

Eine Lösung von Essigsäure in Wasser (1 mol/l) wurde frisch hergestellt. In einem Rundkolben wurden 0,492 g des Schaums aus Beispiel 2 in 10 ml dieser wässrigen Essigsäure suspendiert und bei 70 °C für 4 Stunden gerührt. Anschließend ließ man auf Raumtemperatur abkühlen. Die Farbe des Schaums änderte sich zu leicht gelb. Es wurden 10 ml Dichlormethan hinzugefügt, wobei sich die organische Phase sofort leicht gelb färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.
Das Gewicht des Schaums wurde bestimmt und mit dem Gewicht des ursprünglichen Schaums verglichen. In

diesem Beispiel betrug der Gewichtsverlust 10%.

Der nach der Behandlung erhaltene Schaum war ein harter Block mit gelblicher Farbe und wurde mittels Thermogravimetrie und IR-Spektroskopie untersucht.

*Analysendaten des nach der Behandlung erhaltenen Schaumes:*

IR-Spektroskopie: $\nu$ = 3330,61; 3302,29; 2969,51; 2929,86; 2870,30; 2788,25 (w); 1717,70; 1641,23; 1598,75; 1533,61; 1448,64; 1410,41; 1373,59; 1222,07; 1084,71; 1029,49; 998,33; 924,70; 869,47; 811,41; 764,68; 661,31; 637,23; 604,66 $cm^{-1}$.

Zersetzungstemperaturen:

1. Stufe: 294.55 °C (-12.54%)
2. Stufe: 353.89 °C (-73.11%)

Das in der organischen Phase enthaltene Produkt (organischer Rückstand) wurde mittels NMR-Spektroskopie und IR-Spektroskopie untersucht.

*Analysendaten des organischen Rückstandes:*

$^1$H-NMR-Spektroskopie (400 MHz, $CDCl_3$): $\delta$ = 0,849 (m, 0,149 H, PO-$CH_3$), 0,981-1,327 (m, 1 H, PO-$CH_3$), 3,082-3,74 (m, 0,874 H, PO-CH/PO-$CH_2$), 3,75-4,226 (m, 0,21 H, PO-CH/PO-$CH_2$), 4,509-5,138 (m, 0,269 H, $OCH_2O$) ppm

Aus dem $^1$H-NMR-Spektrum ergibt sich ein molares Verhältnis von Oxymethylengruppen zu Ethergruppen von 0,22.

$^{13}$C-cpd-NMR-Spektroskopie (100 MHz, $CDCl_3$): $\delta$ = 15,85; 16,43; 20,808; 30,92; 53,42; 74,79; 77,02 ($CDCl_3$); 77,22 ($CDCl_3$); 77,34 ($CDCl_3$) ppm.

IR-Spektroskopie: $\nu$ = 3421,24 (br, OH); 2968,09; 2927,03; 2176,51; 1981,09; 1727,61; 1610,08; 1573,26; 1536,4; 1515,20; 1455,72; 1407.58; 1375,01; 1256,06; 1090,38; 1035,15; 921,86; 795,83; 570,52; 702,37; 674,05; 600,42 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

<u>Beispiel 3-6: PUR-Schaumabbau (Schwefelsäure 1M in Wasser, 70 °C)</u>

Eine Lösung von Schwefelsäure in Wasser (1 mol/l) wurde frisch hergestellt. In einem Rundkolben wurden 0,525 g des Schaums aus Beispiel 2 in 10 ml dieser wässrigen Schwefelsäure suspendiert und bei 70 °C für 4 Stunden gerührt. Anschließend ließ man auf Raumtemperatur abkühlen. Die Farbe des Schaums änderte sich zu leicht orange. Es wurden 10 ml Dichlormethan hinzugefügt, wobei sich die organische Phase sofort gelb färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 5,5%.

Der nach der Behandlung erhaltene Schaum war ein harter Block mit gelblicher Farbe und wurde mittels Thermogravimetrie und IR-Spektroskopie untersucht.

*Analysendaten des nach der Behandlung erhaltenen Schnaumes:*

IR-Spektroskopie: $\nu$ = 3472,21; 3299,45; 2969,51; 2870,38; 1692,21; 1661,06; 1598,75; 1532,19; 1447,23; 1408,99; 1375,01; 1206,50; 1154,10; 1079,05; 998,33; 924,70; 868,05; 811,41; 751,94; 601,83 $cm^{-1}$.

Zersetzungstemperaturen:

1. Stufe: 330.87 °C (-69.95%)

Das in der organischen Phase enthaltene Produkt (organischer Rückstand) wurde mittels NMR-Spektroskopie und IR-Spektroskopie untersucht.

*Analysendaten des organischen Rückstandes:*

$^{1}$H-NMR-Spektroskopie (400 MHz, $CDCl_3$): δ = 0,847 (m, 0,056 H, PO-$CH_3$), 1,074 (m, 0,873 H, PO-$CH_3$), 1,209 (m, 0,07 H, PO-$CH_3$), 3,093 (m, 0,023 H, PO-CH/PO-$CH_2$), 3,179-4,143 (m, 1,048 H, PO-CH/PO-$CH_2$), 4,49-5,17 (m, 0,0998 H, $OCH_2O$) ppm.

Aus dem $^{1}$H-NMR-Spektrum ergibt sich ein molares Verhältnis von Oxymethylengruppen zu Ethergruppen von 0,15.

$^{13}$C-cpd-NMR-Spektroskopie (100 MHz, $CDCl_3$): δ = 17,244; 57,98; 71,505; 72,76; 73,33; 75,157; 75,33; 76,70; 77,02 ($CDCl_3$); 77,22 ($CDCl_3$); 77,34 ($CDCl_3$) ppm.

IR-Spektroskopie: ν = 3465,13 (br, OH); 3324,94 (br, OH); 2969,51; 2929,86; 2870,38; 1726,19; 1600,16; 1536,44; 1451,48; 1410,41; 1373,59; 1224,90; 1086,13; 1039,40; 924,70; 868,05; 815,66; 767,51 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

<u>Beispiel 3-7: PUR-Schaumabbau (Trifluormethansulfonsäure 1M in Wasser, 90 °C)</u>

Eine Lösung von Trifluormethansulfonsäure in Wasser (1 mol/l) wurde frisch hergestellt. In einem Rundkolben wurden 0,61 g des Schaums aus Beispiel 2 in 10 ml dieser wässrigen Trifluormethansulfonsäure suspendiert und bei 90 °C für 4 Stunden gerührt. Nach Erreichen der Reaktionstemperatur änderte sich die Farbe des Schaums unmittelbar von leicht gelb zu dunkelrot. Anschließend ließ man auf Raumtemperatur abfühlen. Es wurden 10 ml Dichlormethan hinzugefügt, wobei sich die organische Phase sofort gelb färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 3,4%.

Der nach der Behandlung erhaltene Schaum war ein harter Block mit dunkelroter Farbe und wurde mittels Thermogravimetrie und IR-Spektroskopie untersucht.

*Analysendaten des nach der Behandlung erhaltenen Schaumes:*

IR-Spektroskopie: ν = 3445,31; 3332,02; 2975,17; 2931,27; 1700,71; 1670,97; 1593,08; 1532,19; 1451,48; 1410,41; 1377,84; 1223,49; 1161,18; 1070,55; 1026,65; 930,36; 819,91; 759,02; 635,82 $cm^{-1}$.

Zersetzungstemperaturen:

1. Stufe: 139.24 °C (-10.68%)
2. Stufe: 224.74 °C (-18.30%)
3. Stufe: 409 °C (-29.46%)

Das in der organischen Phase enthaltene Produkt (organischer Rückstand) wurde mittels NMR-Spektroskopie und IR-Spektroskopie untersucht.

*Analysendaten des organischen Rückstandes:*

$^{1}$H-NMR-Spektroskopie (400 MHz, $CDCl_3$): δ = 0,831 (m, 0,039 H, PO-$CH_3$), 1,068 (m, 0,901 H, PO-$CH_3$), 1,22 (m, 0,06 H, PO-$CH_3$), 3,11 (m, 0,024 H, PO-CH/PO-$CH_2$), 3,197-3,797 (m, 0,958 H, PO-CH/PO-$CH_2$), 3,8-4,07 (m, 0,056 H, PO-CH/PO-$CH_2$), 4,44-4,608 (m, 0,001 H, PO-CH/PO-$CH_2$), 4,71-4,977 (m, 0,006 H, $OCH_2O$) ppm.

Aus dem $^{1}$H-NMR-Spektrum ergibt sich ein molares Verhältnis von Oxymethylengruppen zu Ethergruppen von 0,01.

$^{13}$C-cpd-NMR-Spektroskopie (100 MHz, $CDCl_3$): δ = 15,526; 16,959; 17,483; 28,668; 65,034; 66,411; 69,89; 71,768; 72,556; 74,09; 75,745; 76,06 ($CDCl_3$); 76,26 ($CDCl_3$); 76,38 ($CDCl_3$) ppm.

IR-Spektroskopie: ν = 3422,65 (br, OH); 2972,34; 2873,21; 2241,65; 1726,19; 1535,02; 1454,31; 1375,01; 1343; 1282,96; 1254,64; 1224,90; 1079,05; 1029,49; 914,78; 862,39; 809,99; 729,28 (CH2Cl2); 637,23 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Beispiel 3-8: PUR-Schaumabbau (Trifluormethansulfonsäure 1M in Wasser, 30 °C)

Eine Lösung von Trifluormethansulfonsäure in Wasser (1 mol/l) wurde frisch hergestellt. In einem Rundkolben wurden 0,509 g des Schaums aus Beispiel 2 in 10 ml dieser wässrigen Trifluormethansulfonsäure suspendiert und bei 30 °C für 5 Stunden gerührt. Anschließend ließ man auf Raumtemperatur abkühlen. Es wurden 10 ml Dichlormethan hinzugefügt, wobei sich die organische Phase leicht gelb färbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 11%.

Der nach der Behandlung erhaltene Schaum war ein harter Block mit dunkelroter Farbe und wurde mittels Thermogravimetrie und IR-Spektroskopie untersucht.

*Analysendaten des nach der Behandlung erhaltenen Schaumes:*

IR-Spektroskopie: $\nu$ = 3443,89; 3330,61; 2975,17; 2929,86; 2870,38; 1699,29; 1662,47; 1597,33; 1533,61; 1450,06; 1411,83; 1377,84; 1222,07; 1164,01; 1069,14; 1026,65; 930,36; 899,21; 814,24; 759,02; 635,82; 572,09 $cm^{-1}$.

Zersetzungstemperaturen:

1. Stufe: 139.58 °C (-13.94%)
2. Stufe: 237.68 °C (-0.336 %)
3. Stufe: 356.98 °C (-37.33%)

Das in der organischen Phase enthaltene Produkt (organischer Rückstand) wurde mittels NMR-Spektroskopie und IR-Spektroskopie untersucht.

*Analysendaten des organischen Rückstandes:*

$^1H$-NMR-Spektroskopie (400 MHz, $CDCl_3$): $\delta$ = 0,929 (m, 0,042 H, PO-$CH_3$), 1,123 (m, 0,903 H, PO-$CH_3$), 1,282 (m, 0,05 H, PO-$CH_3$), 3,16 (m, 0,027 H, PO-CH/PO-$CH_2$), 3,244-3,87 (m, 0,992 H, PO-CH/PO-$CH_2$), 3,93 (m, 0,049 H, PO-CH/PO-$CH_2$), 4,496-5,082 (m, 0,008 H, $OCH_2O$) ppm.

Aus dem $^1H$-NMR-Spektrum ergibt sich ein molares Verhältnis von Oxymethylengruppen zu Ethergruppen von 0,01.

$^{13}C$-NMR-Spektroskopie: für die Probe dieses Beispiels nicht durchgeführt.

IR-Spektroskopie: $\nu$ = 3433,98 (br, OH); 3053,06; 2972,34; 2871,80; 1723,36; 1656,81; 1601,58; 1537,86; 1452,89; 1375,01; 1343,85; 1265,97; 1226,32; 1083,30; 1030,90; 1011,08; 927,53; 863,81; 732,11; 700,96; 638,65 $cm^{-1}$.

Das charakteristische Signal im IR-Spektrum bei 3300-3500 $cm^{-1}$ belegt eindeutig die Anwesenheit von Hydroxylgruppen im erhaltenen Polyol.

Beispiel 3-9: PUR-Schaumabbau (Methansulfonsäure 1M in Wasser, 70 °C)

Eine Lösung von Methansulfonsäure in Wasser (1 mol/l) wurde frisch hergestellt. In einem Rundkolben wurden 0,509 g des Schaums aus Beispiel 2 in 10 ml dieser wässrigen Methansulfonsäure suspendiert und bei 70 °C für 4 Stunden gerührt. Anschließend ließ man auf Raumtemperatur abkühlen. Es wurden 10 ml Dichlormethan hinzugefügt, wobei sich die organische Phase leicht nicht sichtbar verfärbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 5%.

Der nach der Behandlung erhaltene Schaum war ein harter Block mit dunkelroter Farbe und wurde mittels Thermogravimetrie und IR-Spektroskopie untersucht.

*Analysendaten des nach der Behandlung erhaltenen Schaumes:*

IR-Spektroskopie: $\nu$ = 3452,89; 3282,46; 2970,92; 2928,44; 2870,38; 1699,29; 1662,47; 1598,75; 1532,19; 1448,64; 1410,41; 1373,59, 1222,07; 1076,22; 1042,23; 1001,16; 927,53; 869,47; 812,83; 768,93; 640,07; 550,85; 521,12 $cm^{-1}$.

Zersetzungstemperaturen:

1. Stufe: 88.48 °C (-1.71 %)
2. Stufe: 327.63 °C (-51.58%)
3. Stufe: 368.68 °C (-13.2%)

Das in der organischen Phase enthaltene Produkt (organischer Rückstand) wurde mittels NMR-Spektroskopie und IR-Spektroskopie untersucht.

*Analysendaten des organischen Rückstandes:*

$^1$H-NMR-Spektroskopie (400 MHz, $CDCl_3$): $\delta$ = 0,815-1,351 (m, 1 H, PO-$CH_3$), 1,575 (m, 3 H, $CH_3$ aus der Säure), 3,185-3,811 (m, 0,879 H, PO-CH/PO-$CH_2$), 3,815-4 (m, 0,04 H, PO-CH/PO-$CH_2$), 4,561-5,152 (m, 0,092 H, $OCH_2O$) ppm.

Aus dem $^1$H-NMR-Spektrum ergibt sich ein molares Verhältnis von Oxymethylengruppen zu Ethergruppen von 0,14.

$^{13}$C-NMR-Spektroskopie: für die Probe dieses Beispiels nicht durchgeführt.

IR-Spektroskopie: $\nu$ =3483,54 (br, OH); 3290,37 (br, OH); 2970,92; 2870,38; 1726,19; 1673,8; 1600,16; 1536,44; 1450,06; 1408,99; 1373,59; 1314,12; 1295,71; 1223,49; 1083,30; 1040,81; 926,11; 866,64; 817,07; 767,51 $cm^{-1}$.

Das charakteristische Signal im IR-Spektrum bei 3290-3500 $cm^{-1}$ belegt eindeutig die Anwesenheit von Hydroxylgruppen im erhaltenen Polyol.

<u>Beispiel 3-10: PUR-Schaumabbau (Perchlorsäure 1M in Wasser, 70 °C)</u>

Eine Lösung von Perchlorsäure in Wasser (1 mol/l) wurde frisch hergestellt. In einem Rundkolben wurden 0,48 g des Schaums aus Beispiel 2 in 10 ml dieser wässrigen Perchlorsäure suspendiert und bei 70 °C für 4 Stunden gerührt. Die Farbe des Schaums änderte sich von leicht gelb zu orange. Anschließend ließ man auf Raumtemperatur abkühlen. Es wurden 10 ml Dichlormethan hinzugefügt, wobei sich die organische Phase leicht nicht sichtbar verfärbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 38%.

Der nach der Behandlung erhaltene Schaum war ein harter Block mit dunkelroter Farbe und wurde mittels Thermogravimetrie und IR-Spektroskopie untersucht.

*Analysendaten des nach der Behandlung erhaltenen Schaumes:*

IR-Spektroskopie: $\nu$ = 3463,72; 3350,43; 2972,34; 2929,86; 2871,80; 1696,46; 1661,06; 1597,33; 1530,78; 1448,64; 1410,41; 1375,01;1305,62; 1271,63; 1223,49; 1057,81; 1002,58; 927,53; 870,89; 814,24; 750,52; 621,66 $cm^{-1}$.

Zersetzungstemperaturen:

1. Stufe: 106.22 °C (-6.29%)
2. Stufe: 259.31 °C (-28.46 %)
3. Stufe: 382.46 °C (-11.78 %)

Das in der organischen Phase enthaltene Produkt (organischer Rückstand) wurde mittels NMR-Spektroskopie, IR-Spektroskopie und Thermogravimetrie untersucht.

*Analysendaten des organischen Rückstandes:*

$^{1}H$-NMR-Spektroskopie (400 MHz, $CDCl_3$): $\delta$ = 0,893-1,25 (m, 1H, PO-$CH_3$), 3,073-3,84 (m, 0,989 H, PO-CH/PO-$CH_2$), 3,93 (m, 0,042 H, PO-CH/PO-$CH_2$), 4,55-5,129 (m, 0,036 H, $OCH_2O$) ppm.
Aus dem $^{1}H$-NMR-Spektrum ergibt sich ein molares Verhältnis von Oxymethylengruppen zu Ethergruppen von 0,05.
$^{13}C$-APT-NMR-Spektroskopie (100 MHz, $CDCl_3$): $\delta$ = 17,2; 18,4; 61,0; 73,5; 74,7; 75,3; 77,2 ($CDCl_3$); 77, 34 ($CDCl_3$); 77,5 ($CDCl_3$) ppm.
IR-Spektroskopie: $\nu$ = 3446,72 (br, OH); 3361,76 (br, OH); 2970,92; 2929,86; 2873,21; 1727,61; 1668,14; 1601,58; 1537,86; 1452,89; 1411,83; 1375,01; 1345,27; 1229,15; 1098,87; 1012,49; 930,36; 869,47; 817,07; 624,49 $cm^{-1}$.
Das charakteristische Signal im IR-Spektrum bei 3300-3500 $cm^{-1}$ belegt eindeutig die Anwesenheit von Hydroxylgruppen im erhaltenen Polyol.
Zersetzungstemperaturen:

1. Stufe: 354.72 °C (-72.69%)

Vergleichsbeispiel 3-11: PUR-Schaumabbau (Natronlauge 1M in Wasser, 70 °C)

Eine Lösung von Natriumhydroxid in Wasser (1 mol/l) wurde frisch hergestellt. In einem Rundkolben wurden 0,475 g des Schaums aus Beispiel 2 in 10 ml dieser wässrigen Natronlauge suspendiert und bei 70 °C für 4 Stunden gerührt. Die Farbe des Schaums änderte sich nicht während der Reaktion. Anschließend ließ man auf Raumtemperatur abkühlen. Es wurden 10 ml Dichlormethan hinzugefügt, wobei sich die organische Phase leicht nicht sichtbar verfärbte. Nach intensivem Mischen wurde der zurückgebliebene Schaum abfiltriert und die flüssigen Phasen getrennt. Die wässrige Phase wurde mit Essigsäure neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.
Das Gewicht des Schaums wurde bestimmt und mit dem Gewicht des ursprünglichen Schaums verglichen. In diesem Beispiel betrug der Gewichtsverlust 1%.
Der nach der Behandlung erhaltene Schaum hatte das gleiche Erscheinungsbild wie vor der Behandlung mit Natronlauge, aber etwas gelber und wurde mittels IR-Spektroskopie untersucht.

*Analysendaten des nach der Behandlung erhaltenen Schaumes:*

IR-Spektroskopie: $\nu$ = 3455,22; 329,73; 2970,92; 2929,86; 2871,80; 1706,37; 1656,81; 1600,16; 1533,61; 1448,64; 1410,41; 1375,01; 1339,61; 1294,29; 1275,88; 1222,07; 1084,71; 1030,90; 998,33; 926,11; 870,89; 812,83; 733,53; 699,54; 611,74 $cm^{-1}$.
Das in der organischen Phase enthaltene Produkt (organischer Rückstand) wurde mittels NMR-Spektroskopie und IR-Spektroskopie untersucht.

*Analysendaten des organischen Rückstandes:*

$^{1}H$-NMR-Spektroskopie (400 MHz, $CDCl_3$): $\delta$ = 0,893-1,25 (m, 1H, PO-$CH_3$), 3,073-3,84 (m, 0,989 H, PO-CH/PO-$CH_2$), 3,93 (m, 0,042 H, PO-CH/PO-$CH_2$), 4,55-5,129 (m, 0,036 H, $OCH_2O$) ppm.
Aus dem $^{1}H$-NMR-Spektrum ergibt sich ein molares Verhältnis von Oxymethylengruppen zu Ethergruppen von 0,05.
$^{13}C$-APT-NMR-Spektroskopie (100 MHz, $CDCl_3$): $\delta$ = 17,2; 18,4; 61,0; 73,5; 74,7; 75,3; 77,2 ($CDCl_3$); 77, 34 ($CDCl_3$); 77,5 ($CDCl_3$) ppm.
IR-Spektroskopie: $\nu$ = 3446,72 (br, OH); 3361,76 (br, OH); 2970,92; 2929,86; 2873,21; 1727,61; 1668,14; 1601,58; 1537,86; 1452,89; 1411,83; 1375,01; 1345,27; 1229,15; 1098,87; 1012,49; 930,36; 869,47; 817,07; 624,49 $cm^{-1}$.
Das charakteristische Signal im IR-Spektrum bei 3300-3500 $cm^{-1}$ belegt eindeutig die Anwesenheit von Hydroxylgruppen im erhaltenen Polyol.

Vergleichsbeispiel 3-12: PUR-Schaumabbau (Essigsäure 1,2 M in Wasser, 70 °C)

Eine Lösung von Essigsäure in Wasser (1,2 mol/l) wurde frisch hergestellt. In einem Rundkolben wurden 0,42 g des Schaums aus Beispiel 2 in 10 ml dieser wässrigen Essigsäure suspendiert und bei 70 °C für 4 Stunden gerührt.

Die Farbe des Schaums änderte sich nicht. Anschließend ließ man auf Raumtemperatur abkühlen. Es wurden 10 ml Dichlormethan hinzugefügt, wobei sich die organische Phase leicht nicht sichtbar verfärbte. Nach intensivem Mischen wurde der zurückgebliebene Schaum abfiltriert und die flüssigen Phasen getrennt. Die wässrige Phase wurde mit Natronlauge neutralisiert und mit Dichlormethan extrahiert. Die vereinigten organischen Phasen wurden über Magnesiumsulfat getrocknet und das Lösungsmittel im Rotationsverdampfer entfernt. Der Schaum wurde mit Aceton und Dichlormethan gewaschen und bei Raumtemperatur getrocknet.

Das Gewicht des Schaums wurde bestimmt und mit dem Gewicht des ursprünglichen Schaums verglichen. In diesem Beispiel betrug der Gewichtsverlust 0.5%.

Der nach der Behandlung erhaltene Schaum war ein weicher Block in weißer Farbe und wurde mittels Infrarot-Spektroskopie untersucht.

*Analysendaten des nach der Behandlung erhaltenen Schaumes:*

IR-Spektroskopie: $\nu$ = 3497,70; 2969,51; 2868,55; 1727,61; 1638,40; 1601,58; 1533,61; 1452,89; 1373,59; 1342,44; 1297,12; 1229,15; 1088,96; 1012,49; 926,11; 866,64; 819,91 $cm^{-1}$.

Das in der organischen Phase enthaltene Produkt (organischer Rückstand) wurde mittels NMR-Spektroskopie untersucht. Eine weitergehende Analytik konnte auf Grund der geringen Menge nicht durchgeführt werden.

*Analysendaten des organischen Rückstandes:*

$^1$H-NMR-Spektroskopie (400 MHz, $CDCl_3$): $\delta$ = 0,893-1,25 (m, 3H, PO-$CH_3$), 3,073-3,84 (m, 0,989 H, PO-CH/PO-$CH_2$), 3,93 (m, 0,042 H, PO-CH/PO-$CH_2$) ppm.

Aus dem $^1$H-NMR-Spektrum ergibt sich ein molares Verhältnis von Oxymethylengruppen zu Ethergruppen von 0,00.

*Vergleich*

Die nachfolgende Tabelle zeigt einen Vergleich der Resultate aus den Beispielen 3-1 bis 3-10 und den Vergleichsbeispielen 3-11 und 3-12.

| Beispiel | Eingesetzter Polyurethanpolymerschaum | Abbaureagenz | Konzentration [M] | Temperatur [°C] | Gewichtsverlust Schaum [%] |
|---|---|---|---|---|---|
| 3-1 | PU1-1 | $CF_3SO_3H$ | 0.2 | 70 | 50 |
| 3-2 | PU1-1 | $CF_3SO_3H$ | 0.5 | 70 | 46 |
| 3-3 | PU1-1 | $CF_3SO_3H$ | 1 | 70 | 21 |
| 3-4 | PU1-2 | $CH_3CO_2H$ | 0.5 | 70 | 5 |
| 3-5 | PU1-2 | $CH_3CO_2H$ | 1 | 70 | 10 |
| 3-6 | PU1-2 | $H_2SO_4$ | 1 | 70 | 5.5 |
| 3-7 | PU1-2 | $CF_3SO_3H$ | 1 | 90 | 3.4 |
| 3-8 | PU1-2 | $CF_3SO_3H$ | 1 | 30 | 11 |
| 3-9 | PU1-2 | $CH_3SO_3H$ | 1 | 70 | 5 |
| 3-10 | PU1-2 | $HClO_4$ | 1 | 70 | 38 |
| 3-11 (Vgl.) | PU1-2 | NaOH | 1 | 70 | 1 |
| 3-12 (Vgl.) | PU1-3 | $CH_3CO_2H$ | 1,2 | 70 | 0.5 |

Ein Vergleich der Beispiele 3-1 bis 3-10 mit den Vergleichsbeispielen 3-11 und 3-12 belegt, dass die gemäß der vorliegenden Erfindung hergestellten Polyurethanpoylmere in sauren Medien bereits unter milden Bedingungen bei Temperaturen $\leq$90°C (Beispiele 3-1 bis 3-10) abbaubar sind, während ein Abbau in basischen Medien (Vergleichsbeispiel 3-11) nur zu geringem Maße stattfindet und vergleichbare Polyurethanpolymere, deren Polyolkomponente keine Oxymethylengruppen enthält, unter gleichen Bedingungen nicht abgebaut werden (Vergleichsbeispiel 3-12).

Beispiel 4-1: Herstellung eines Polyurethanpolymers aus dem erhaltenen Recyclat

Die Herstellung eines Polyurethanpolymers aus dem erhaltenen Recyclat wurde in einem Rheometer durchgeführt. Eine Lösung des erhaltenen Rückstandes aus Beispiel 3-1 in Dimethylsulfoxid zeigte eine Viskosität von 29.76 mPa s (30°C, Einwegmesssystem, Platte-Platte Konfiguration, 15mm, Messspalt 0.5 mm). Anschließend wurden 50 mg 2,4-Toluyldiisocyanate und 7 mg Dibutylzinndilaurate gelöst in 0.1 ml DMSO zu der Probe zugegeben und der Anstieg der Viskosität auf dem Rheometer verfolgt. Die Viskosität stieg innerhalb von 266,5 min auf einen Wert von 177.6 mPa s an.

Nach Öffnen der Messzelle wurde ein weißer Feststoff erhalten, der sich langsam leicht gelb färbte.

Der Anstieg der Viskosität belegt eindeutig, dass ein Polyurethanpolymer aus dem erhaltenen Recyclat und einem Polyisocyanat hergestellt werden kann.

## Patentansprüche

**1.** Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol A) und/oder B) umfasst, welche erhältlich sind durch:

im Fall des Polyols A) Umsetzung von Formaldehyd mit einer Starterverbindung mit mindestens 2 Zerewitinoff-aktiven H-Atomen und Comonomeren in Gegenwart eines Katalysators;
im Fall des Polyols B) Umsetzung einer oligomeren Formaldehyd-Vorstufe mit einer Starterverbindung mit mindestens 2 Zerewitinoff-aktiven H-Atomen in Gegenwart eines Katalysators;

**dadurch gekennzeichnet, dass**
das Mengenverhältnis der Polyolkomponente zur der Polyisocyanatkomponente so gewählt ist, dass das durch die Reaktion erhaltene Polyurethanpolymers einen Gehalt an aus dem Oxymethylenpolyol A) und/oder B) stammenden Oxymethylengruppen von > 0 bis <10 Gewichts-%, bezogen auf das Gesamtgewicht des Polyurethanpolymers, aufweist.

**2.** Verfahren gemäß Anspruch 1, wobei im Fall des Polyols A) in der Umsetzung des Formaldehyds mit der Starterverbindung das Formaldehyd in gasförmiger Form und ein Alkylenoxid als Comonomer eingesetzt werden.

**3.** Verfahren gemäß Anspruch 1 oder 2, wobei in den Fällen des Polyols A) und/oder B) der mindestens eine Katalysator ausgewählt wird aus der Gruppe bestehend aus Alkalihydroxiden, Doppelmetallcyanidverbindungen, Zinnverbindungen, Bismutverbindungen und Lewis-Säuren.

**4.** Verfahren gemäß einem der Ansprüche 1 bis 3, wobei im Fall des Polyols A) das Comonomer Ethylenoxid, Propylenoxid und/oder Styroloxid ist.

**5.** Polyurethanpolymer, erhältlich durch ein Verfahren gemäß einem der Ansprüche 1 bis 4, mit einem Gehalt an Oxymethylengruppen von > 0 bis < 10 Gewichts-% bezogen auf das Gesamtgewicht des Polyurethanpolymers.

**6.** Verfahren zur Aufarbeitung eines Polyols, umfassend die Schritte:

(i) Bereitstellen eines Polyols mit einem Gehalt an Oxymethylengruppen von > 0 bis < 10 Gewichts-%;
(ii) Einwirken einer Säure auf das Polyol aus Schritt (i);
(iii) Isolieren einer organischen Phase aus dem Produkt des Einwirkens der Säure auf das Polyol aus Schritt (ii).

**7.** Verfahren gemäß Anspruch 6, wobei die Säure in wässriger Lösung eingesetzt wird.

**8.** Verfahren gemäß Anspruch 6 oder 7, wobei die Säure einen $pK_A$-Wert von ≤ 4 aufweist.

**9.** Verfahren gemäß einem der Ansprüche 6 bis 8, wobei das Einwirken der Säure auf das Polyol bei einer Temperatur von ≥ 30 °C bis ≤ 90 °C durchgeführt wird.

**10.** Verfahren zur Aufarbeitung eines Polyurethanpolymers, umfassend die Schritte:

(α) Bereitstellen eines Polyurethanpolymers mit einem Gehalt an Oxymethylengruppen von > 0 bis < 10 Gewichts-%;
(β) Einwirken einer Säure auf das Polyurethanpolymer aus Schritt (α);
(γ) Isolieren einer organischen Phase aus dem Produkt des Einwirkens der Säure auf das Polyurethanpolymer aus Schritt (β).

**11.** Verfahren gemäß Anspruch 10, wobei das Polyurethanpolymer ein Polyurethanpolymer gemäß Anspruch 7 oder 8 ist.

**12.** Verfahren gemäß Anspruch 10 oder 11, wobei die Säure in wässriger Lösung eingesetzt wird.

**13.** Verfahren gemäß einem der Ansprüche 10 bis 12, wobei die Säure einen $pK_A$-Wert von ≤ 4 aufweist.

**14.** Verfahren gemäß einem der Ansprüche 10 bis 13, wobei das Einwirken der Säure auf das Polyol bei einer Temperatur von ≥ 30 °C bis ≤ 90 °C durchgeführt wird.

**15.** Verfahren gemäß einem der Ansprüche 10 bis 14, wobei nach dem Isolieren der organischen Phase aus dem Produkt des Einwirkens der Säure auf das Polyurethanpolymer in der organischen Phase vorliegendes Polyol zumindest teilweise für die Herstellung eines Polyurethanpolymers eingesetzt wird.

Europäisches Patentamt
European Patent Office
Office européen des brevets

# EUROPÄISCHER RECHERCHENBERICHT

Nummer der Anmeldung
EP 16 18 5742

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | WO 2014/198689 A1 (BAYER MATERIALSCIENCE AG [DE]) 18. Dezember 2014 (2014-12-18)<br>* Seite 1, Zeilen 2-7 *<br>* Seite 2, Zeilen 4-6 *<br>* Seite 4, Zeilen 16-18 *<br>* Seite 9, Zeile 25 - Seite 10, Zeile 5 *<br>* Seite 11, Zeilen 18-29 *<br>* Seite 27, Zeilen 6-10; Beispiele 2, 4 *<br>----- | 1-5<br>6-15 | INV.<br>C08G2/08<br>C08G2/38<br>C08G18/56<br>C08G18/76<br>C08G101/00 |
| X<br>A | WO 93/16977 A1 (DU PONT [US]) 2. September 1993 (1993-09-02)<br>* Seite 1, Zeilen 7-13 *<br>* Seite 5, Zeilen 23-28; Beispiele 1, 5 *<br>----- | 1,2,4,5<br>3,6-15 | |
| X<br>A | US 4 383 100 A (PECHHOLD ENGELBERT) 10. Mai 1983 (1983-05-10)<br>* Spalte 1, Zeilen 14-19, 35-45 *<br>* Spalte 2, Zeilen 23-28 *<br>* Spalte 5, Zeile 30 - Spalte 6, Zeile 23 *<br>----- | 1,2,4,5<br>3,6-15 | RECHERCHIERTE SACHGEBIETE (IPC) |
| A | US 2005/049387 A1 (VAN SANG [US] ET AL) 3. März 2005 (2005-03-03)<br>* Absätze [0001], [0046], [0047], [0073]; Abbildungen 8, 9; Beispiele 17-32 *<br>----- | 1-15 | C08G |

Der vorliegende Recherchenbericht wurde für alle Patentansprüche erstellt

1

| Recherchenort | Abschlußdatum der Recherche | Prüfer |
|---|---|---|
| München | 9. Februar 2017 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 16 18 5742

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-02-2017

| Im Recherchenbericht angeführtes Patentdokument | Datum der Veröffentlichung | Mitglied(er) der Patentfamilie | Datum der Veröffentlichung |
|---|---|---|---|
| WO 2014198689 A1 | 18-12-2014 | CN 105408377 A | 16-03-2016 |
| | | EP 3008100 A1 | 20-04-2016 |
| | | JP 2016521788 A | 25-07-2016 |
| | | KR 20160018546 A | 17-02-2016 |
| | | SG 11201509857P A | 30-12-2015 |
| | | US 2016130407 A1 | 12-05-2016 |
| | | WO 2014198689 A1 | 18-12-2014 |
| WO 9316977 A1 | 02-09-1993 | EP 0628023 A1 | 14-12-1994 |
| | | JP H07505176 A | 08-06-1995 |
| | | US 5254744 A | 19-10-1993 |
| | | WO 9316977 A1 | 02-09-1993 |
| US 4383100 A | 10-05-1983 | KEINE | |
| US 2005049387 A1 | 03-03-2005 | AT 507252 T | 15-05-2011 |
| | | EP 1664144 A1 | 07-06-2006 |
| | | HK 1092822 A1 | 16-12-2011 |
| | | JP 4809768 B2 | 09-11-2011 |
| | | JP 2007504298 A | 01-03-2007 |
| | | US 2005049387 A1 | 03-03-2005 |
| | | WO 2005023899 A1 | 17-03-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0039206 A1
- WO 2014095679 A1


### In der Beschreibung aufgeführte Nicht-Patentliteratur


- *Fibers and Polymers,* 2011, vol. 12 (7), 857-863
- **GRASSIE, N. ; ROCHE, R. S.** The thermal degradation of polyoxymethylene. *Makromol. Chem.,* 1968, vol. 112, 16-33